# EUROPÄISCHE PATENTSCHRIFT

(11) **EP 0 921 970 B1**
(45) Veröffentlichungstag und Bekanntmachung des Hinweises auf die Patenterteilung: **01.08.2001**
(21) Anmeldenummer: 97919008.9
(22) Anmeldetag: 29.08.1997
(51) Int. Cl.: B61D 45/00, B60P 7/13

(54) **Fahrzeug mit einer Vorrichtung zur Sicherung eines Gegenstandes**
Vehicle with device for securing an object
Véhicule avec un système pour fixer un objet

(30) Priorität: 30.08.1996 DE 29615063 U
(43) Veröffentlichungstag der Anmeldung: 16.06.1999
(73) Patentinhaber: IT Consulting AG, 6330 Cham (CH)
(72) Erfinder: SCHULZ, Gerd, D-34289 Zierenberg (DE)
(74) Vertreter: Eisenführ, Speiser & Partner
(86) Internationale Anmeldenummer: EP9704701
(87) Internationale Veröffentlichungsnummer: WO9808720

(56) Entgegenhaltungen:
- EP-A- 0 382 458
- EP-A- 0 425 370
- DE-A- 1 963 635
- DE-A- 2 060 840
- DE-A- 4 331 247
- DE-A- 4 341 484
- DE-U- 8 101 528
- FR-A- 1 593 437
- FR-A- 2 541 211

## Beschreibung

Die Erfindung betrifft eine vorrichtung zur Sicherung eines Gegenstandes, insbesondere Containers oder Wechselbehälters, auf einem Fahrzeug, insbesondere einem Behältertragwagen, mit mindestens einem am Fahrzeug befestigten und mit einem ersten Eingriffsabschnitt versehenen Sicherungselement, das bei Aufsetzen des Gegenstandes auf das Fahrzeug in einen am Gegenstand (1) angeordneten Beschlag einführbar und mit einem ersten Abschnitt des Beschlages in Eingriff bringbar ist.

Eine solche Vorrichtung wird hauptsächlich zur Sicherung von Containern auf speziellen Eisenbahnwaggons (Behältertragwagen) eingesetzt, mit denen die Container transportiert werden. An den Ecken der Container ist jeweils ein Beschlag angeordnet, der in gewohnter Weise aus einem Gehäuse mit darin ausgebildeten Öffnungen besteht. Die Sicherungselemente sind als einfache Steckzapfen ausgebildet, die auf der die Container aufnehmenden Aufstandsfläche der Behältertragwagen aufrechtstehend angeordnet sind. Neben einer feststehenden Ausführung gibt es auch abklappbare Ausführungen, bei welchen die Steckzapfen in eine Ruhestellung unterhalb der Aufstandsfläche vollständig wegklappbar sind, falls sie nicht benötigt werden oder sogar stören.

Aufgrund der ebenen und fast stoßfreien Schienenführung ist es bei den bisherigen Geschwindigkeiten möglich, die Container an ihren Eckbeschlägen mittels der Steckzapfen zu positionieren, indem die Container auf die Behältertragwagen aufgesetzt und dabei die auf den Behältertragwagen befestigten Steckzapfen einfach in die zugewandten Öffnungen der an den Containern angeordneten Eckbeschläge eingeführt werden. Das Aufsetzen wie auch das Absetzen der Container auf bzw. von den Behältertragwagen erfolgt mit Hilfe von speziellen Umschlaggeräten, Spezialkränen oder ähnlichen Vorrichtungen ohne weitere manuelle Hilfe; insbesondere ist eine Bedienung der Sicherungsvorrichtung nicht notwendig.

Als Eingriffsabschnitte sind an den Steckzapfen seitlich Einkerbungen vorgesehen, die bei Winddruck und Sog gegen unbeabsichtigtes Abheben der Container von den Behältertragwagen Halt bieten. Durch Winddruck oder Sog werden nämlich die Container aus ihrer ursprünglichen Aufsetzposition heraus auf den Behältertragwagen verschoben, wodurch die Eckbeschläge der Container dann in Eingriff mit den seitlichen Einkerbungen der Steckzapfen gelangen.

Man hat jedoch mittlerweile feststellen müssen, daß mit zunehmender Transportgeschwindigkeit die einfache Form der zuvor beschriebenen Sicherung nicht mehr ausreicht. Es ist nämlich beobachtet worden, daß unter hohen Geschwindigkeiten, insbesondere bei Fahrten durch Tunnels, Container hohen und auch stark wechselnden Kräften ausgesetzt sind, insbesondere bedingt durch hohen Winddruck und Sog sowie starken Wechsel zwischen Winddruck und Sog, so daß die Container sich von den Steckzapfen 'freischütteln' und somit von den Behältertragwagen abheben können. Die durch Abheben von Containern entstehenden Schäden können beträchtlich sein, und zwar nicht nur an den Containern selbst, sondern beispielsweise auch an den Behältertragwagen und an der Oberleitung.

Es ist daher Aufgabe der vorliegenden Erfindung, die Sicherungsvorrichtung der eingangs genannten Art derart zu verbessern, daß ein unbeabsichtigtes Abheben des Gegenstandes vom Fahrzeug auch bei höheren Fahrgeschwindigkeiten zumindest weitestgehend ausgeschlossen wird.

Diese Aufgabe wird dadurch gelöst, daß bei einer Vorrichtung der eingangs genannten Art der erste Eingriffsabschnitt beweglich gelagert, für den Eingriff mit dem Beschlag federnd vorgespannt und derart ausgebildet ist, daß er beim Aufsetzen des Gegenstandes auf das Fahrzeug aufgrund der Wirkung der Vorspannung selbsttätig am Beschlag einrastet und sich beim Abheben des Gegenstandes vom Fahrzeug erst nach Überwindung der Vorspannung selbsttätig aus dem Beschlag löst, wobei die Vorspannung so bemessen ist, daß ein unbeabsichtigtes Abheben des Gegenstandes vom Fahrzeug während der Fahrt im wesentlichen nicht möglich ist.

Mit Hilfe der erfindungsgemäßen Konstruktion erhält die Sicherungsvorrichtung eine automatische Klemmwirkung, wodurch dem unbeabsichtigten Abheben des Gegenstandes vom Fahrzeug eine vorbestimmte Spannkraft entgegengesetzt wird. Gleichwohl ist das Aufsetzen des Gegenstandes auf das Fahrzeug und das gewollte Abheben des Gegenstandes vom Fahrzeug mit Hilfe der gebräuchlichen Handhabungsvorrichtungen wie beispielsweise Umschlaggeräte ohne weiteres nach wie vor möglich. Dies wird erfindungsgemäß dadurch erreicht, daß der erste Eingriffsabschnitt nicht mehr wie bisher stationär angeordnet ist, sondern beweglich in Eingriffsrichtung federnd vorgespannt und außerdem nach Art einer Raste ausgebildet ist, wodurch sich sowohl ein selbsttätiger Eingriff am Beschlag während des Aufsetzens des Gegenstandes auf das Fahrzeug als auch ein selbsttätiges Lösen vom Beschlag beim - gewollten - Abheben des Gegenstandes vom Fahrzeug realisieren läßt, wobei sich der erste Eingriffsabschnitt des Sicherungselementes erst nach Überwindung der Vorspannung vom Beschlag lösen läßt. Demgegenüber wird ein unbeabsichtiges Abheben des Gegenstandes vom Fahrzeug während der Fahrt durch die entsprechend bemessene und auf den ersten Eingriffsabschnitt wirkende Vorspannung im wesentlichen verhindert. Zweckmäßigerweise bemißt sich die Vorspannung nach dem Gewicht des zu transportierenden Gegenstandes. Existieren von dem zu transportierenden Gegenstand verschiedene Ausführungen mit unterschiedlichen Gewichten, haben die zu transportierenden Gegenstände unterschiedliche Gewichte oder handelt es sich bei den Gegenständen um Container oder Wechselbehälter, so sollte die Vorspannung stets im Hinblick auf das geringste auftretende Gewicht und im Falle von Containern oder Wechselbehältern im Hinblick auf deren Leergewicht entsprechend dimensioniert sein, da bei geringem Gewicht der Gegenstand eher abzuheben droht als bei einem hohen Gewicht.

Mit Hilfe der Erfindung wird also die Betriebssicherheit der Sicherungsvorrichtung deutlich erhöht, so daß sich diese nunmehr insbesondere auch für höhere Transportgeschwindigkeiten eignet.

Schließlich besteht ein weiterer Vorteil der Erfindung darin, daß sich die erfindungsgemäße Sicherungsvorrichtung nicht nur für den Neubau von Fahrzeugen eignet, sondern auch für den Umbau vorhandener Fahrzeuge problemlos einsetzen läßt.

Eine konstruktiv besonders einfache Ausführung besteht darin, daß der Eingriffsabschnitt in Eingriffsrichtung um eine Achse schwenkbar gelagert ist.

Es ist auch denkbar, das gesamte Sicherungselement beweglich zu lagern und für das Einrasten des ersten Eingriffsabschnittes am Beschlag federnd vorzuspannen, so daß demnach der erste Eingriffsabschnitt über das Sicherungselement beweglich vorgespannt ist.

Zweckmäßigerweise ist das Sicherungselement als Zapfen ausgebildet, der die den Gegenstand aufnehmende Aufstandsfläche des Fahrzeugs überragt und vorzugsweise deshalb im wesentlichen aufrechtsteht, so daß er sich in den zugehörigen, am Gegenstand angeordneten Beschlag leicht einführen läßt.

Eine gegenwärtig besonders bevorzugte Ausführung zeichnet sich dadurch aus, daß der erste Eingriffsabschnitt als vom Sicherungselement seitlich abstehender erster Vorsprung ausgebildet ist, der bei auf das Fahrzeug aufgesetztem Gegenstand den ersten Abschnitt des Beschlages hintergreift. Der Vorsprung erstreckt sich dabei in einem Winkel gegenüber der Richtung, in der das Sicherungselement in den Beschlag eingeführt wird.

Zur Erzielung einer besonders einfachen Rastwirkung verjüngt sich vorzugsweise der erste Vorsprung nach außen hin.

Bei einer Weiterbildung dieser Ausführung weist das Sicherungselement ein freies Ende, mit dem es in den Beschlag am Gegenstand einführbar ist, und der erste Vorsprung mindestens eine erste Fläche, die sich gegenüber der Einführrichtung geneigt in Richtung auf das freie Ende erstreckt, und eine zweite Fläche auf, die sich ebenfalls gegenüber der Einführrichtung geneigt, jedoch gegenüber der ersten Fläche in entgegengesetzter Richtung erstreckt, wobei die erste Fläche und die zweite Fläche während des Aufsetzens und Abhebens des Gegenstandes auf das und von dem Fahrzeug zumindest zeitweise am ersten Abschnitt des Beschlages in Anlage bringbar sind. Demnach bildet die erste Fläche eine Führungsfläche, die beim Einführen des Sicherungselementes in Gleitanlage an den ersten Abschnitt des Beschlages gelangt und eine Bewegung des ersten Eingriffsabschnittes entgegen der Vorspannung bewirkt, bis die zweite Fläche in Anlage an den ersten Abschnitt des Beschlages gelangt. Da die zweite Fläche in entgegengesetzter Richtung gegenüber der ersten Fläche verläuft, bewirkt diese zweite Fläche nun eine Bewegungsumkehr des ersten Eingriffsabschnittes in Richtung der Vorspannung, wodurch der Vorsprung in seine Klemm- oder Rastposition gelangt, in der er den ersten Abschnitt des Beschlages hintergreift. Demnach hat die zweite Fläche die Aufgabe einer Klemm- oder Rastfläche.

Eine weitere bevorzugte Ausführung zeichnet sich dadurch aus, daß das Sicherungselement mit einem zweiten Eingriffsabschnitt versehen ist, der in Eingriff mit einem zweiten Abschnitt des Beschlages für den Fall bringbar ist, daß sich der erste Eingriffsabschnitt vom ersten Abschnitt des Beschlages unbeabsichtigt löst. Bei diesem zweiten Eingriffsabschnitt handelt es sich sozusagen um eine Vorsichtsmaßnahme, die dann zum Tragen kommt, wenn tatsächlich einmal der erste Eingriffsabschnitt unbeabsichtigt wirkungslos wird. Mit Hilfe des zweiten Eingriffsabschnittes wird demnach die Betriebssicherheit der erfindungsgemäßen Sicherungsvorrichtung noch weiter erhöht.

Vorzugsweise ist der zweite Eingriffsabschnitt am Sicherungselement derart angeordnet, daß er in einer Richtung im wesentlichen entgegengesetzt zur Richtung der Vorspannung wirkt.

Ähnlich wie der erste Eingriffsabschnitt sollte vorzugsweise auch der zweite Eingriffsabschnitt als vom Sicherungselement seitlich abstehender zweiter Vorsprung zum Hintergreifen des zweiten Abschnittes des Beschlages ausgebildet sein. Demnach erstreckt sich auch der zweite Eingriffsabschnitt in einem Winkel gegenüber der Richtung, in der das Sicherungselement in den Beschlag eingeführt wird.

Zweckmäßigerweise sollte der zweite Vorsprung mindestens eine ein Widerlager in bezug auf den zweiten Abschnitt des Beschlages bildende Kante oder erste Fläche aufweisen. Diese Kante oder Fläche dient somit als Klemmittel und kann so angeordnet sein, daß im Falle eines Eingriffs ein Abheben des Gegenstandes vom Fahrzeug grundsätzlich nicht möglich ist. Dabei kann die erste Fläche im wesentlichen rechtwinklig zur Einführrichtung verlaufen.

Die beiden zuvor beschriebenen Vorsprünge können gemeinsam einen wulstförmigen Abschnitt am Sicherungselement bilden, so daß das Sicherungselement im Kopfbereich eine Wulstform erhält.

Eine in diesem Zusammenhang besonders bevorzugte Ausführung, bei welcher der Beschlag eine Aussparung aufweist, in die das Sicherungselement einführbar ist, und der erste Abschnitt und der zweite Abschnitt des Beschlages die Aussparung begrenzen, zeichnet sich dadurch aus, daß sich die Breite des wulstförmigen Abschnittes des Sicherungselementes zwischen den beiden Vorsprüngen nach dem Abstand zwischen den beiden Abschnitten des Beschlages bemißt. Mit dieser Anordnung kann auf besonders einfache Weise der Bewegungsspielraum des Sicherungselementes gegenüber dem Beschlag klein gehalten werden, in welchem beide Eingriffsabschnitte bzw. Vorsprünge wirkungslos sind. Nur in diesem Zustand läßt sich auch das Sicherungselement aus dem Beschlag lösen und der Gegenstand vom Fahrzeug abnehmen.

Bei einer bevorzugten Weiterbildung dieser Ausführung liegen der erste Abschnitt und der zweite Abschnitt des Beschlages im wesentlichen in einer Ebene, welche etwa rechtwinklig zur Einführrichtung verläuft, und ist die erste Fläche des zweiten Vorsprunges in einem geringeren Abstand vom freien Ende des Sicherungselementes als die zweite Fläche des zweiten Vorsprunges angeordnet, so daß bei unbeabsichtigtem Abheben des Gegenstandes vom Fahrzeug die erste Fläche des zweiten Vorsprunges in Anlage an den zweiten Abschnitt des Beschlages gelangt, wenn die zweite Fläche des ersten Vorsprunges außer Anlage vom ersten Abschnitt des Beschlages gelangt ist. Hiernach sind die beiden Vorsprünge gegeneinander versetzt. Die als Klemm- oder Rastfläche dienende zweite Fläche des ersten Vorsprunges ist, in Einführrichtung betrachtet, unterhalb der als Widerlager vorgesehenen ersten Fläche des zweiten Vorsprunges angeordnet. Dadurch wird verhindert, daß sich bei Abheben des Gegenstandes vom Fahrzeug das Sicherungselement in der Aussparung des Beschlages verklemmt, ohne daß die Wirkung des zweiten Vorsprunges verlorengeht. Die erste Fläche des zweiten Vorsprunges kann nämlich den zweiten Abschnitt des Beschlages erst dann hintergreifen, wenn der Gegenstand und somit der Beschlag soweit angehoben worden ist, daß sich der erste Abschnitt des Beschlages, an den das Sicherungseiement mit seinem ersten Vorsprung aufgrund der Vorspannung anliegt, nicht mehr in berührendem Eingriff mit der zweiten Fläche des ersten Vorsprunges befindet, sondern diesen in Richtung auf die erste Fläche bereits 'verlassen' hat.

Vorzugsweise ist die Vorspannung einstellbar, und zwar im allgemeinen derart, daß die Vorspannung zwar so hoch ist, daß ein unbeabsichtigtes Abheben des Gegenstandes vom Fahrzeug während der Fahrt bis zu einer vorbestimmten Maximalgeschwindigkeit im wesentlichen unmöglich ist, jedoch zum anderen so niedrig bleibt, daß ein einfaches Abheben mit den gebräuchlichen Umschlaggeräten möglich bleibt.

Zweckmäßigerweise wird die Vorspannung von einer Feder erzeugt, die mit ihrem einen Ende am Sicherungselement und mit ihrem anderen Ende am Fahrzeug befestigt ist.

Eine weitere bevorzugte Ausführung, bei welcher das Sicherungselement in einer Arbeitsstellung zumindest zu einem Teil oberhalb einer auf dem Fahrzeug für die Auflage des Gegenstandes vorgesehen Aufstandsfläche angeordnet ist, zeichnet sich dadurch aus, daß das Sicherungselement bei Nichtgebrauch in eine Ruhestellung verbringbar ist, in der es vollständig unterhalb der Aufstandsfläche liegt. Bei schwenkbarer Lagerung des Sicherungselementes für die Wirkung der Vorspannung sollte das Sicherungselement gleichzeitig auch um die Schwenkachse in die Ruhestellung klappbar sein, wobei ein Schwenkwinkel von nur etwa 90° erforderlich ist.

Dabei kann das Sicherungselement als beidseitiger Hebel ausgebildet sein, an dessen einem Hebelabschnitt der erste Eingriffsabschnitt vorgesehen und an dessen entgegengesetztem Hebelabschnitt die Feder mit ihrem einen Ende befestigt ist, die als Druckfeder ausgebildet und mit ihrem anderen Ende in Anlage an einen am Fahrzeug vorgesehen Anschlag bringbar ist. Bei dieser Weiterbildung wird die Druckfeder zusammen mit dem Sicherungselement in die Ruhestellung verbracht. Dadurch kann die gesamte Einheit besonders kompakt gestaltet werden und ist auch für die Nachrüstung besonders geeignet. Das als beidseitiger Hebel ausgebildete Sicherungselement kann in Abhängigkeit von der Einbausituation wahlweise gradlinig oder abgewinkelt sein.

Ferner sollte eine Einrichtung zur Arretierung des Sicherungselementes in seiner Arbeitsstellung derart, daß es nicht in die Ruhestellung gelangt, vorgesehen werden. Eine besonders einfache Konstruktion diesbezüglich bildet ein Handhebel mit Raste. Alternativ kann auch eine vorzugsweise ferngesteuerte Antriebseinrichtung wie beispielsweise ein Pneumatikzylinder vorgesehen sein.

Ferner kann vorzugsweise eine Einrichtung zum Blockieren des ersten Eingriffsabschnittes in der Position, in der er am Beschlag eingerastet ist, vorgesehen sein. Durch diese zusätzliche Blockiereinrichtung wird also der erste Eingriffsabschnitt in seiner Klemm- oder Rastposition blockiert, so daß im Zweifelsfall für den Transport des Gegenstandes eine absolute Sicherung gegen Abheben realisiert wird. Dabei wird der erste Eingriffsabschnitt zumindest in seiner Bewegungsrichtung entgegen der Richtung der Vorspannung blockiert oder arretiert, so daß er sich entgegen der Vorspannung nicht mehr bewegen kann. Die Betätigung der Blockiereinrichtung kann sowohl manuell von außen als auch elektrisch oder pneumatisch durch das bordeigene Versorgungssystem erfolgen, wobei eine zusätzliche visuelle Zustandsanzeige vorteilhaft ist. Das Aufsetzen und Abheben des Gegenstandes ist natürlich nur in nicht-blockiertem Zustand des ersten Eingriffsabschnittes des Sicherungselementes möglich.

Eine gegenwärtig besonders bevorzugte Weiterbildung dieser Ausführung zeichnet sich dadurch aus, daß die Blockiereinrichtung ein Anschlagelement aufweist, das zwischen einer Arbeitsstellung und einer Ruhestellung bewegbar gelagert und in seiner Arbeitsstellung derart angeordnet ist, daß das Sicherungselement in Bewegungsrichtung entgegengesetzt zur Vorspannrichtung in Anlage an das Anschlagelement bringbar ist bzw. am Anschlagelement anliegt, wenn der erste Eingriffsabschnitt am Beschlag eingerastet ist. Zweckmäßigerweise sollte dabei das Sicherungselement als beidseitiger Hebel ausgebildet sein, an dessen einem Hebelabschnitt der erste Eingriffsabschnitt vorgesehen ist und dessen anderer Hebelabschnitt in Schwenkrichtung entgegengesetzt zur Vorspannrichtung in Anlage an das Anschlagelement bringbar ist bzw. am Anschlag anliegt, wenn sich das Anschlagelement in seiner Arbeitsstellung befindet und der erste Eingriffsabschnitt am Beschlag eingerastet ist. Das Anschlagelement sollte in seiner Arbeitsstellung arretierbar sein.

Bei einer Weiterbildung der zuvor beschriebenen Ausführung sollte zusätzlich eine Einrichtung vorgesehen sein, die die Fahrtgeschwindigkeit des Fahrzeuges erfaßt und die Blockiereinrichtung nur bei Stillstand des Fahrzeuges deaktiviert. Mit dieser Weiterbildung wird die Blockierung des ersten Eingriffsabschnittes des Sicherungselementes automatisiert, so daß eine externe Betätigung durch ein Bedienungspersonal überflüssig wird.

Um die Vorrichtung an verschiedene Größen des auf dem Fahrzeug zu transportierenden Gegenstandes anzupassen, sollte das Sicherungselement in seiner Position am Fahrzeug verstellbar angeordnet sein. Hierzu sollte zweckmäßigerweise eine Antriebseinrichtung zur Verstellung und Arretierung des Sicherungselementes vorgesehen sein. Vorzugsweise sollte das Sicherungselement etwa quer zur Einführrichtung, insbesondere entlang einer auf dem Fahrzeug für die Auflage des Gegenstandes vorgesehenen Aufstandsfläche, verstellbar angeordnet sein.

Das Sicherungselement sollte vorzugsweise an einem Gerüst oder in einem Gehäuse gelagert sein, das bei der zuvor beschriebenen Ausführung in seiner Position am Fahrzeug verstellbar angeordnet sein sollte. Das Gerüst oder Gehäuse sollte auch alle weiteren Komponenten der Vorrichtung wie beispielsweise die Feder, die Blockiereinrichtung und die Antriebseinrichtung zur Verstellung und Arretierung des Sicherungselementes am Fahrzeug aufnehmen, wodurch eine kompakte Einheit geschaffen wird, die sämtliche notwendigen Teile der Vorrichtung enthält und sich insbesondere auch zur Nachrüstung an vorhandenen Fahrzeugen eignet.

Üblicherweise sind mindestens zwei oder mehr am Fahrzeug befestigte Sicherungselemente und mindestens zwei oder mehr zugehörige am Gegenstand angeordnete Beschläge vorgesehen. Dabei kann die Betriebssicherheit der Sicherungsvorrichtung noch dadurch erhöht werden, daß die ersten Eingriffsabschnitte der Sicherungselemente in entgegengesetzter Richtung voneinander weg vorgespannt sind. Eine solche Maßnahme hat den Vorteil, daß auch bei Verrutschen des Gegenstandes auf dem Fahrzeug die ersten Eingriffsabschnitte der Sicherungselemente stets in Eingriff mit den ersten Abschnitten der zugehörigen Beschläge verbleiben.

Nachfolgend werden bevorzugte Ausführungsbeispiele der Erfindung näher erläutert. Es zeigen:
- Figur 1: in teilweise geschnittener Seitenansicht eine erste Ausführung der Sicherungsvorrichtung mitunblockiertem Steckzapfen in Arbeitsstellung;
- Figur 2: die erste Ausführung der Sicherungsvorrichtung in gleicher Ansicht wie Figur 1, jedoch mit blockiertem Steckzapfen;
- Figur 3: die erste Ausführung der Sicherungsvorrichtung in gleicher Ansicht wie Figur 1, jedoch mit in eine Ruhestellung weggeklapptem Steckzapfen, wobei aus Gründen der Übersichtlichkeit die Blockiereinrichtung weggelassen ist;
- Figur 4: die erste Ausführung der Sicherungsvorrichtung in einer anderen teilweise geschnittenen Seitenansicht;
- Figur 5: in teilweise geschnittener Seitenansicht eine zweite Ausführung der Sicherungsvorrichtung;
- Figur 6: in teilweise geschnittener Seitenansicht eine dritte Ausführung der Sicherungsvorrichtung; und
- Figur 7: in teilweise geschnittener Seitenansicht eine in durchgezogene Linien gezeigte vierte Ausführung mit in Arbeitsstellung befindlichem Steckzapfen sowie gleichzeitig in unterbrochenen Linien die zweite Ausführung gemäß Figur 5 mit in seine Ruhestellung weggeklapptem Steckzapfen.

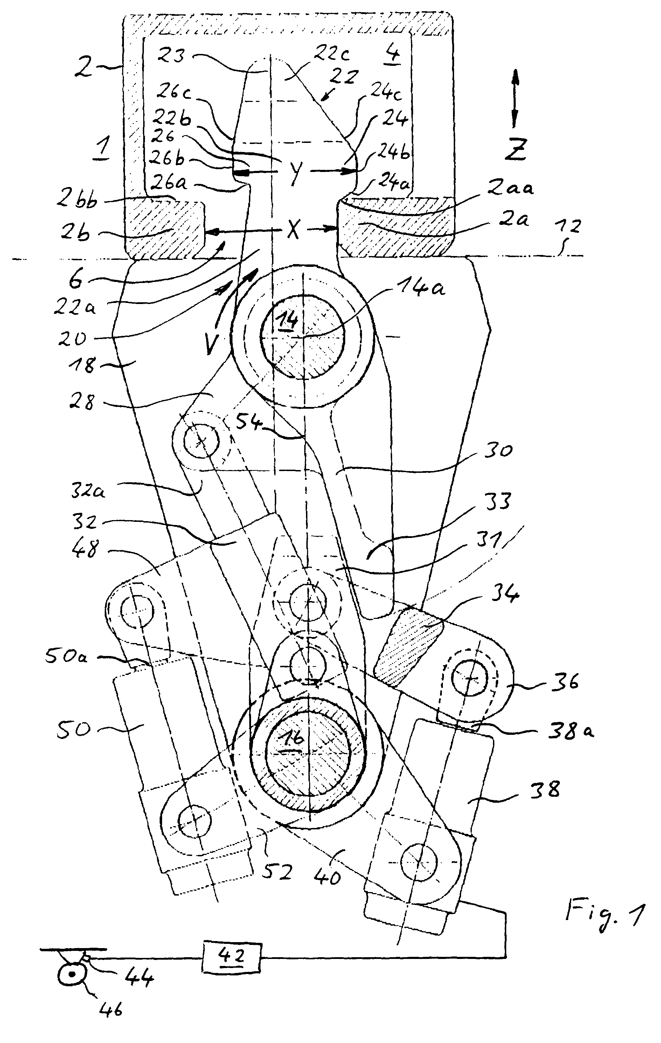

Die in den Figuren 1 bis 7 dargestellten und nachfolgend im einzelnen beschriebenen Ausführungen einer Sicherungsvorrichtung sind insbesondere zur Sicherung von Containern und Wechselbehältern auf Eisenbahnwaggons vorgesehen, die auch als Behältertragwagen bezeichnet werden. Gleichwohl kann die Sicherungsvorrichtung auch zur Sicherung von beliebigen Gegenständen auf beliebigen Fahrzeugen verwendet werden.

In den Figuren soll mit der Bezugsziffer "1" derjenige Teil eines (ansonsten im einzelnen nicht näher dargestellten) Containers angedeutet sein, an dem ein Beschlag 2 vorgesehen ist. Ein solcher Container ist an den Ecken mit Beschlägen versehen, von denen in den Figuren der Beschlag 2 im Querschnitt gezeigt ist. Der Beschlag 2 weist ein im wesentlichen quaderförmiges Gehäuse auf, das einen Hohlraum 4 umschließt und in der Darstellung der Figuren an seiner Unterseite mit einer Öffnung 6 versehen ist. Die Öffnung 6 ist in der Querschnittsansicht gemäß den Figuren 1 bis 3 und 5 bis 7 von einem ersten Abschnitt 2a und einem zweiten Abschnitt 2b des Gehäuses begrenzt, die in einem Abstand X voneinander liegen, welcher die Weite der Öffnung 6 in dieser Querschnittsansicht entsprechend bestimmt.

In den Figuren ist mit dem Bezugszeichen "10" der Eisenbahnwaggon teilweise angedeutet, der jedoch im einzelnen nicht näher dargestellt ist. Der Eisenbahnwaggon 10 weist an seiner Oberseite eine Aufstandsfläche 12 auf, die in den Figuren 1 bis 4 gestrichelt skizziert ist und auf die der Container 1 mit der die Öffnung 6 aufweisenden Unterseite seines Beschlages 2 aufsetzbar ist, wie die Figuren erkennen lassen. Dabei liegen in der dargestellten Ausführung die die Öffnung 6 begrenzenden ersten und zweiten Abschnitte 2a und 2b des Beschlages 2 in einer Ebene, also gegenüber der Aufstandsfläche 12 auf gleicher Höhe.

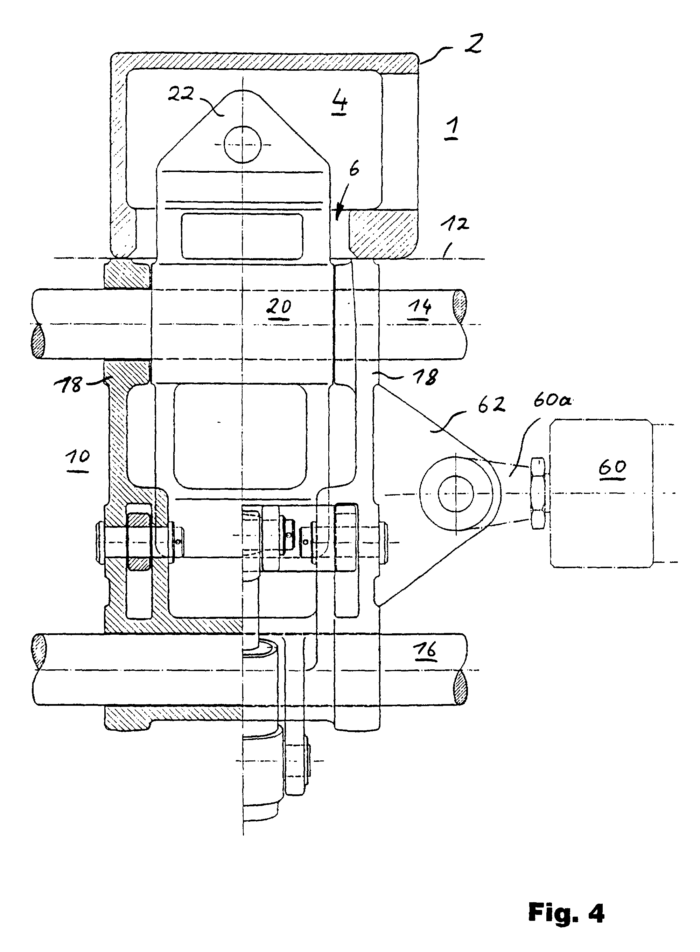

Bei der Ausführung gemäß den Figuren 1 bis 4 sind am Eisenbahnwaggon 10 unterhalb seiner Aufstandsfläche 12 zwei im wesentlichen horizontal und parallel zueinander verlaufende Lagerstäbe 14, 16 in vertikaler Richtung untereinander angeordnet. Diese Lagerstäbe 14, 16 können sich wahlweise in Fahrtrichtung des Eisenbahnwaggons oder quer hierzu erstrecken. Wie insbesondere Figur 4 erkennen läßt, ist an den Lägerstäben 14, 16 ein Gerüst oder Gehäuse 18 gehaltert.

Innerhalb des Gerüstes 18 ist am oberen, zur Aufstandsfläche 12 nächstgelegenen Lagerstab 14 ein Sicherungselement 20 schwenkbar gelagert, und zwar derart, daß die Längsachse 14a des Lagerstabes 14 gleichzeitig die Schwenkachse des Sicherungselementes 20 bildet.

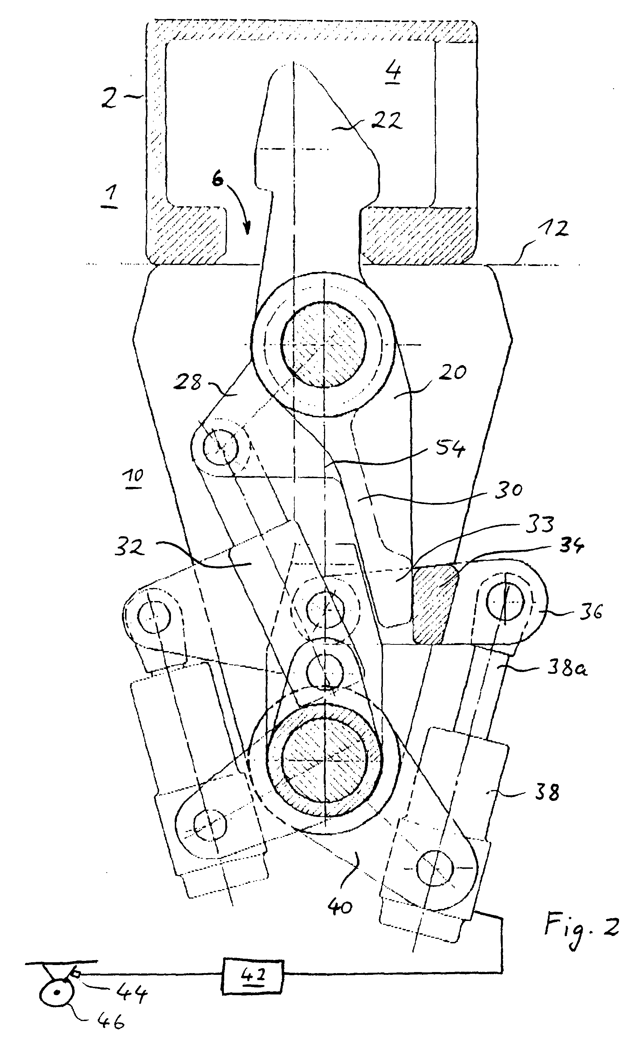

Das Sicherungselement 20 ist als beidseitiger Hebel ausgebildet, dessen einer Hebelabschnitt als Steckzapfen 22 vorgesehen ist, der in seiner in Figur 1 und 2 gezeigten Arbeitsstellung im wesentlichen aufrechtstehend über die Aufstandsfläche 12 hinaus emporragt. Sofern sich die in den Figuren 1 bis 4 nicht näher dargestellte Aufstandsplatte, deren Oberseite die Aufstandsfläche 12 bildet, auch über den Ort des Steckzapfens 22 erstreckt, ist dort die Aufstandsplatte mit einem Durchbruch versehen, durch den der Steckzapfen 22 geführt ist. Bei Aufsetzen des Containers 1 auf die Aufstandsfläche 12 des Eisenbahnwaggons 10 wird der in seiner Arbeitsstellung gemäß Figur 1 und 2 aufrechtstehende Steckzapfen 22 in den zugehörigen Beschlag durch dessen Öffnung 6 eingeführt, so daß sich bei auf dem Eisenbahnwaggon 10 aufgesetztem Container 1 der Steckzapfen 22 in den Hohlraum 4 des Beschlages 2 erstreckt, wie in den Figuren 1 und 2 dargestellt ist.

Der Steckzapfen 22 besteht im wesentlichen aus drei unterschiedlich geformten Abschnitten, und zwar einem dem Lagerrohr 14 nächstliegenden ersten Abschnitt 22a, einem wulstförmigen zweiten Abschnitt 22b sowie einem das freie Ende 22c bildenden dritten Abschnitt. Der erste Abschnitt 22a, der in der Arbeitsstellung des Steckzapfens 22 bei auf dem Eisenbahnwaggon 10 aufgesetztem Container 1 im wesentlichen in der Öffnung 6 des Beschlages 2 des Containers 1 liegt, weist eine im wesentlichen gleichbleibende Breite auf, die deutlich geringer ist als der Abstand X zwischen den ersten und zweiten Abschnitten 2a und 2b des Beschlages 2, wie insbesondere Figur 1 erkennen läßt. In der Arbeitsstellung gemäß Figur 1 befinden sich bei auf dem Eisenbahnwaggon 10 aufgesetztem Container 1 der zweite wulstförmige Abschnitt 22b und das freie Ende 22c des Steckzapfens 22 innerhalb des Hohlraumes 4 des Beschlages 2.

Der wulstförmige zweite Abschnitt 22b des Steckzapfens 22 weist zwei gegenüberliegende Vorsprünge 24, 26 auf. Der erste (gemäß Figur 1 nach rechts gerichtete) Vorsprung 24 weist eine erste Fläche 24a, eine zweite Fläche 24b und eine dritte Fläche 24c auf. Diese Flächen 24a, 24b und 24c sind so angeordnet, daß der erste Vorsprung 24 in der Ansicht gemäß Figur 1 eine Trapezform besitzt. Die erste Fläche 24a schließt sich vom ersten Abschnitt 22a des Steckzapfens 22 an und verläuft in einem Winkel gegenüber der Einführrichtung bzw. der Aufsetz- und Abheberichtung Z und somit auch gegenüber der Längsachse 23 des Steckzapfens 22 geneigt nach außen, bis sich die zweite Fläche 24b anschließt, die im wesentlichen parallel zur Einführrichtung Z und zur Längsachse 23 verläuft. Die dritte Fläche 24c schließt sich wiederum an der zweiten Fläche 24 an und verläuft in einem Winkel gegenüber der Einführrichtung Z und der Längsachse 23 in Richtung auf das freie Ende 22c und somit in entgegengesetzter Richtung gegenüber der geneigten ersten Fläche 24a. Die dritte Fläche 24c geht schließlich über in die Fläche des freien Endes 22c.

Auch der gegenüberliegende zweite Vorsprung 26 besitzt in der Ansicht gemäß Figur 1 eine Trapezform mit einer ersten Fläche 26a, einer zvveiten Fläche 26b und einer dritten Fläche 26c, wobei sich allerdings die ersten und dritten Flächen 26a und 26c in ihren Neigungswinkeln gegenüber den ersten und dritten Flächen 24a und 24c des ersten Vorsprunges 24 unterscheiden. Wie Figur 1 erkennen läßt, ist die sich an den ersten Abschnitt 22a des Steckzapfens 22 anschließende erste Fläche 26a in einem steileren Winkel gegenüber der Einführrichtung Z bzw. der Längsachse 23 des Steckzapfens 22 angeordnet, wobei der Winkel wahlweise auch 90 ° betragen kann, was aus nachfolgend noch näher erläuterten Erwägungen bei der ersten Fläche 24a des ersten Vorsprunges 24 nicht der Fall sein darf. Die sich an die erste Fläche 26a anschließende zweite Fläche 26b verläuft im wesentlichen parallel zur Einführrichtung Z bzw. Längsachse 23 und somit auch parallel zur zweiten Fläche 24b des ersten Vorsprunges 24. An die zweite Fläche 26b schließt sich die dritte Fläche 26c an, die gegenüber der Einführrichtung Z bzw. der Längsachse 23 geneigt in Richtung auf das freie Ende 22c des Steckzapfens 22 verläuft und in die Fläche des freien Endes 22c übergeht, wobei gemäß Figur 1 der Neigungswinkel der dritten Fläche 26c des zweiten Vorsprunges 26 gegenüber der Einführrichtung Z bzw. der Längsachse 23 deutlich geringer ist.

Der Abstand Y zwischen den beiden parallel verlaufenden zweiten Flächen 24b, 26b der ersten und zweiten Vorsprünge 24, 26 und somit die Breite Y des wulstförmigen zweiten Abschnittes 22b des Steckzapfens 22 ist nach der Weite X zwischen den ersten und zweiten Abschnitten 2a, 2b des Beschlages 2 in dessen Öffnung 6 bemessen und nur geringfügig kleiner als diese.

Wie Figur 1 ebenfalls erkennen läßt, sind die beiden Vorsprünge 24, 26 in Einführrichtung Z bzw. in Richtung der Längsachse 23 des Steckzapfens 22 versetzt zueinander angeordnet, indem der zweite Vorsprung 26 einen geringeren Abstand zum freien Ende 22c des Steckzapfens 22 aufweist als der erste Vorsprung 24, und zwar derart, daß die erste Fläche 26a des zweiten Vorsprunges 26 nicht auf der Höhe der ersten Fläche 24a des ersten Vorsprunges liegt, sondern bereits auf der Höhe von dessen zweiter Fläche 24b.

Wie bereits erwähnt, ist das Sicherungselement 20 als beidseitiger Hebel ausgebildet, wobei die Schwenkachse mit der Längsachse 14a des oberen Lagerstabes 14 zusammenfällt. Während der eine Hebelabschnitt vom zuvor beschriebenen Steckzapfen 22 gebildet wird, der in der Arbeitsstellung gemäß Figur 1 im wesentlichen aufrecht nach oben ragt, erstreckt sich der andere Hebelabschnitt in entgegengesetzter Richtung unterhalb der Aufstandsfläche 12 und ist somit in der Arbeitsstellung nach unten gerichtet. Der andere Hebelabschnitt besteht aus zwei Teilen, und zwar einer Lasche 28 und einem Fortsatz 30.

Am radial äußeren Ende des Fortsatzes 28 ist mit ihrem einen Ende 32a eine Federeinrichtung 32 angelenkt, die mit ihrem anderen Ende am Gehäuse 18 gelagert ist. Die Federeinrichtung 32 ist in der dargestellten Ausführung als Druckfeder in einer Kolben/Zylinder-Anordnung ausgebildet und übt ein Drehmoment auf das Sicherungselement 20 derart aus, daß der Steckzapfen 22 in Richtung des Pfeils V vorgespannt wird. Dies hat zur Folge, daß in der Arbeitsstellung gemäß Figur 1 der Steckzapfen 22 mit seinem ersten Abschnitt 22a am ersten Abschnitt 2a des Beschlages 2 anliegt und dabei der erste Vorsprung 24 den ersten Abschnitt 2a des Beschlages 2 hintergreift, während der erste Abschnitt 22a und der zweite Vorsprung 26 des Steckzapfens 22 in einem Abstand vom zweiten Abschnitt 2b des Beschlages 2 angeordnet ist.

Aufgrund der zuvor beschriebenen Form des Steckzapfens 22 gelangt beim Aufsetzen des Containers 1 auf die Aufstandsfläche 12 des Eisenbahnwaggons 10 der Steckzapfen 22 im Regelfall zunächst mit der dritten Fläche 24c des ersten Vorsprunges 24 in gleitende Anlage an den ersten Abschnitt 2a des Beschlages 2 und wird bei fortgesetzter Aufsetzbewegung gegen die Vorspannung in Richtung entgegengesetzt des Pfeils V zwangsweise verschwenkt, wobei die dritte Fläche 24c des ersten Vorsprunges 24 als Führungsfläche dient. Anschließend gelangt die zweite Fläche 24b des ersten Vorsprunges 24 in gleitende Anlage an den ersten Abschnitt 2a des Beschlages, wobei eine weitere Auslenkung des Steckzapfens 22 entgegen der Vorspannung nicht mehr stattfindet, da sich die zweite Fläche 24b etwa in Einführrichtung Z erstreckt. Anschließend gelangt die erste Fläche 24a des ersten Vorsprunges 24 in gleitende Anlage an den ersten Abschnitt 2a des Beschlages 2, und zwar an dessen innerer Kante 2aa, wodurch der Steckzapfen 22 aufgrund der Wirkung der Vorspannung durch die Federeinrichtung 32 wieder in Richtung des Pfeils V zurückverschwenkt wird, bis der Container 1 vollständig auf der Aufstandsfläche 12 des Eisenbahnwaggons 10 aufgesetzt und der erste Abschnitt 22a des Steckzapfens 22 in Anlage an den ersten Abschnitt 2a des Beschlages 2 gelangt ist. In dieser Position hintergreift der erste Vorsprung 24 den ersten Abschnitt 2a des Beschlages 2, wobei die erste Fläche 24a des ersten Vorsprunges 24 in der dargestellten Ausführung in Anlage an der Kante 2aa des ersten Abschnittes 2a des Beschlages 2 bleibt. Demnach bildet die erste Fläche 24a eine Klemm- oder Rastfläche, während die dritte Fläche 24c eine Führungsfläche bildet.

Beim Abnehmen des Containers 1 vom Eisenbahnwaggon 10 erfolgt der zuvor beschriebene Bewegungsablauf in umgekehrter Weise, allerdings mit dem Unterschied, daß zunächst die Vorspannung überwunden werden muß, da nun die erste Fläche 24a ein zwangsweises Verschwenken des Steckzapfens 22 entgegen der Vorspannung und somit entgegen der Richtung des Pfeils V verursacht.

In der in Figur 1 gezeigten Stellung rastet der Steckzapfen 22 aufgrund seiner zuvor beschriebenen besonderen Form mit seinem ersten Vorsprung 22 unter dem Einfluß der von der Federeinrichtung 32 erzeugten Vorspannung am Beschlag 2 ein, indem der erste Vorsprung 24 den ersten Abschnitt 2a des Beschlages 2 hintergreift. Demnach bildet der erste Vorsprung 24 des Steckzapfens 22 eine Raste. Auf diese Weise wird ein ungewolltes Lösen des Beschlages 2 vom Steckzapfen 22 und somit ein unbeabsichtigtes Abheben des Containers 1 vom Eisenbahnwaggon 10 verhindert.

Die von der Federeinrichtung 32 erzeugte Vorspannung ist einstellbar und sollte so bemessen sein, daß ein unbeabsichtigtes Lösen des Beschlages 2 vom Steckzapfen 22 während der Fahrt zumindest bis zu einer vorgegebenen Maximalgeschwindigkeit im wesentlichen nicht möglich ist. Ferner richtet sich die Einstellung der Vorspannung bei der dargestellten Ausführung nach dem Mindestgewicht der zu transportierenden Container, bei welchem es sich um das Leergewicht handelt, da regelmäßig unbeladene Container schnell zum unbeabsichtigten Abheben während hoher Fahrt aufgrund des Winddruckes und/oder Soges neigen.

Sollte gleichwohl einmal bei ungünstigen Bedingungen während der Fahrt die Vorspannung durch Winddruck oder Sog überwunden werden, so kommt der zweite Vorsprung 26 zur Wirkung, Bevor nämlich der Container 1 vollständig abzuheben droht, wird er erfahrungsgemäß zunächst aufgrund von durch Winddruck und/oder Sog erzeugten Seitenkräften entlang der Aufstandsfläche 12 verschoben. Wenn nun der Container 1 entlang der Aufstandsfläche 12 derart verrutscht, daß der erste Abschnitt 2a des Beschlages 2 aus dem Eingriff mit dem Steckzapfen 22 gelöst wird, so nähert sich automatisch der gegenüberliegende zweite Abschnitt 2b des Beschlages 2 dem Steckzapfen 22, wodurch der zweite Vorsprung 26. den zweiten Abschnitt 2b des Beschlages 2 hintergreift. Sollte der Container 1 dann abheben, so wird diese Bewegung sofort gestoppt, da dann der zweite Abschnitt 2b des Beschlages 2 mit seiner Innenfläche 2bb in Anlage an die erste Fläche 26a des zweiten Vorsprunges 26 gelangt. Demnach bildet der zweite Vorsprung 26 ein Widerlager gegen unbeabsichtigtes Abheben, falls die Klemmwirkung des ersten Vorsprunges 24 einmal doch tatsächlich nachlassen sollte.

Die in der Höhe gegeneinander versetzte Anordnung der beiden Vorsprünge 24, 26 erlaubt ein kontrolliertes Herauslösen des Steckzapfens 22 aus dem Beschlag 2, ohne daß hierfür die Weite X der Öffnung 6 gegenüber der Breite Y des wulstförmigen zweiten Abschnittes 22b des Steckzapfens 22 zwischen den beiden Vorsprüngen 24, 26 deutlich größer gemacht werden muß. Vielmehr braucht die Öffnungsweite X nur geringfügig größer als die Breite Y zu sein, um zwar einerseits ein kontrolliertes Herauslösen des Steckzapfens 22 aus dem Beschlag 2 zu erlauben, andererseits jedoch einen relativ schnellen und wirkungsvollen Eingriff des zweiten Vorsprunges 26 am zweiten Abschnitt 2b des Beschlages 2 zu ermöglichen. Zwar kann der Beschlag 2 von der Aufstandsfläche 12 um die Höhe der ersten Fläche 24a in Richtung der Einführrichtung Z bzw. der Längsachse 23 angehoben werden; jedoch sind in einer solchen Situation die auf den Container 1 wirkenden Seitenkräfte derart groß, daß dieser einer Rutsch- oder Schaukelbewegung im allgemeinen derart unterworfen wird, daß die erste Fläche 26a des zweiten Vorsprunges 26 bereits in Anlage an die Innenfläche 2bb des zweiten Abschnittes 2b des Beschlages 2 gebracht wird, wenn die erste Fläche 24a des ersten Vorsprunges 24 außer Anlage vom ersten Abschnitt 2a des Beschlages 2 gelangt.

Der ein unbeabsichtigtes Abheben verhindernde zweite Vorsprung 26 ist jedoch, wie bereits erwähnt, nur als Notfallmaßnahme vorgesehen und sollte daher auch nur in Ausnahmefällen zum Einsatz kommen. Gewöhnlich soll der erste Vorsprung 24 den Container 1 auf der Aufstandsfläche 12 des Eisenbahnwaggons 10 arretieren, indem aufgrund des von der Federeinrichtung 32 erzeugten Anpreßdruckes die innere Kante 2aa des ersten Abschnittes 2a des Beschlages 2 an der schräg nach unten geneigten ersten Fläche 24a des ersten Vorsprunges 24 des Steckzapfens 22 entlang zwangsweise nach unten geführt und somit der Beschlag mit dem Container 1 gegen die Aufstandsfläche 12 des Eisenbahnwaggons 10 gedrückt wird.

Wie Figure 1 ferner erkennen läßt, befindet sich der Fortsatz 30 mit seinem freien Ende 33 in Anlage an einem Abschnitt 31 des Gerüstes 18, wenn der Steckzapfen 22 am Beschlag 2 vollständig eingerastet ist. Dieser Abschnitt 31 des Gerüstes 18 dient somit als Anschlag, der eine fortgesetzte Schwenkbewegung in Richtung des Pfeils V verhindert und somit verhindert, daß die Federeinrichtung 32 vollständig entspannt wird.

In der Stellung, in der aufgrund der von der Federeinrichtung 32 erzeugten Vorspannung der Steckzapfen 22 in der zuvor beschriebenen Weise mit seinem ersten Vorsprung 24 am Beschlag 2 einrastet, kann wahlweise der Steckzapfen 22 blockiert werden, so daß eine Schwenkbewegung entgegen der Wirkung der Vorspannung und somit entgegen des Pfeils V verhindert wird. Hierzu ist der zuvor bereits erwähnte Fortsatz 30 vorgesehen, dessen freies Ende 33 in Anlage an ein Anschlagelement 34 bringbar ist. Das Anschlagelement 34 sitzt an einem Gelenkstück 36, das mit seinem einen Ende am Gehäuse 18 gelenkig gelagert und an dessen anderem Ende der Kolben 38a eines ersten Pneurnatikzylinders 38 angelenkt ist. Der erste Pneumatikzylinder 38 wiederum ist an einer am Gerüst 18 befestigten Lasche 40 gelenkig gelagert.

Durch Betätigung des ersten Pneumatikzylinders 38 ist das Anschlagelement 34 mit dem dieses halternden Gelenkstück 36 zwischen einer Ruhestellung und einer Arbeitsstellung verschwenkbar. In der Ruhestellung, wie sie in Figur 1 gezeigt ist, befindet sich das Anschlagelement 34 unterhalb des freien Endes 33 des Fortsatzes 30, so daß sich der Fortsatz 30 ungestört am Anschlagelement 34 vorbeibewegen kann. In diesem Betriebszustand ist also ein kontrolliertes Lösen des Steckzapfens 22 aus dem Beschlag 2 und somit ein Abheben des Containers 1 vom Eisenbahnwaggon 10 möglich. In der in Figur 2 gezeigten Arbeitsstellung liegt demgegenüber das Anschlagelement 34 am freien Ende 33 des Fortsatzes 30 an und blockiert somit eine Schwenkbewegung des Sicherungselementes 20 entgegen der Wirkung der Vorspannung und somit entgegen der Richtung des Pfeils V. Dadurch läßt sich der Steckzapfen 22 vom ersten Abschnitt 2a des Beschlages 2 nicht wegverschwenken und somit dessen erster Vorsprung 24 nicht aus dem Eingriff mit dem ersten Abschnitt 2a des Beschlages 2 lösen. Damit wird ein unbeabsichtigtes Lösen des Beschlages 2 vom Steckzapfen 22 und somit ein unbeabsichtigtes Abheben des Containers 1 vom Eisenbahnwaggon 10 vollständig verhindert.

In der dargestellten Ausführung wird der erste Pneumatikzylinder 38 - es können im übrigen auch andere Arten von Antrieben wie beispielsweise ein Elektromagnet verwendet werden - von einer Steuereinrichtung 42 angesteuert, und zwar in Abhängigkeit von einem Drehzahlsignal von einem Sensor 44, der die Drehzahl eines Rades 46 des Eisenbahnwaggons 10 mißt. Mit dem Sensor 44 soll erfaßt werden, ob sich der Eisenbahnwaggon 10 in Fahrt befindet oder nicht.

Mißt der Sensor 44 eine Drehzahl größer Null, so erkennt die Steuereinrichtung 42, daß sich der Eisenbahnwaggon 10 in Fahrt befindet. In diesem Fall steuert die Steuereinrichtung 42 den ersten Pneumatikzylinder 38 derart an, daß er das Gelenkstück 36 mit dem daran befestigten Anschlagelement 34 in die Arbeitsstellung gemäß Figur 2 verschwenkt, so daß das Sicherungselement 20 und somit der Steckzapfen 22 blockiert sind - vorausgesetzt, daß der Container auf dem Eisenbahnwaggon 10 aufliegt und der Steckzapfen 22 mit seinem ersten Vorsprung am Beschlag in der zuvor beschriebenen Weise eingerastet ist.

Mißt demgegenüber der Sensor 44 keine Drehzahl, also Drehzahl gleich Null, so erkennt die Steuereinrichtung 42, daß sich der Eisenbahnwaggon 10 nicht in Fahrt befindet, sondern stillsteht. In diesem Fall steuert die Steuereinrichtung 42 den ersten Pneumatikzylinder 38 so an, daß er das Gelenkstück 36 in die Ruhestellung gemäß Figur 1 verschwenkt, wodurch die Blockierung des Sicherungselementes und somit der Steckzapfen 22 zum Abheben des Containers 1 vom Eisenbahnwaggon 10 freigegeben wird.

An dieser Stelle sei ergänzend angemerkt, daß die Tatsache, ob sich der Eisenbahnwaggon 10 in Fahrt befindet oder nicht, auch auf andere Weise als durch den in Figur 1 und 2 schematisch dargestellten Sensor 44 erfaßt werden kann; entscheidend ist, daß die Zustände "Geschwindigkeit gleich Null" und "Geschwindigkeit größer Null" gemessen werden, damit die Steuereinrichtung 42 erkennt, ob sich der Eisenbahnwaggon 10 in Fahrt befindet oder nicht.

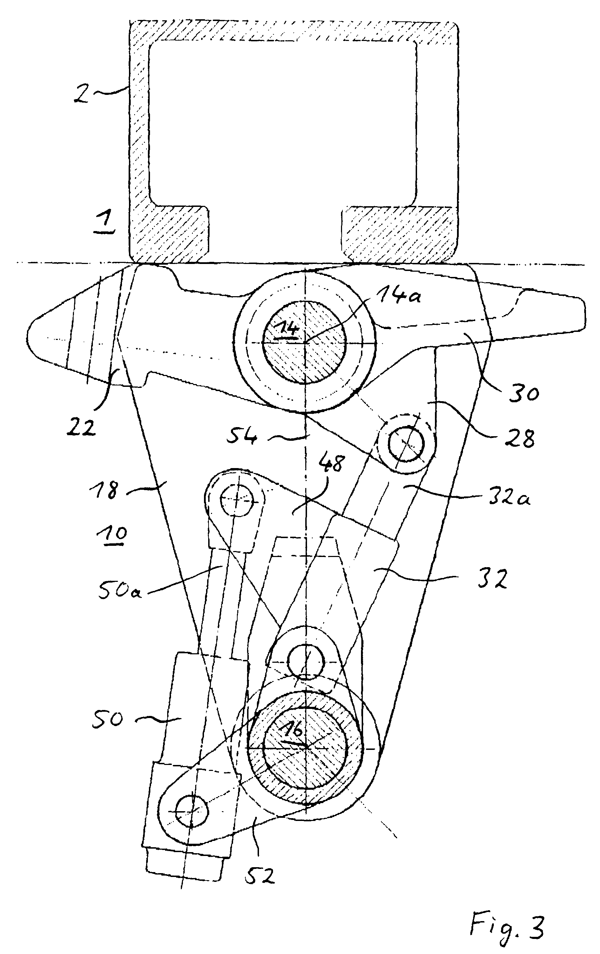

Für den Fall, daß der Steckzapfen 22 nicht benötigt wird und vielleicht sogar stört, läßt sich das gesamte Sicherungselement 20 um die Längsachse 14a des oberen Lagerstabes 14 von der in Figur 1 und 2 dargestellten Arbeitsstellung in eine Ruhestellung unterhalb der Aufstandsfläche 12 wegklappen, wie in Figur 3 gezeigt ist, in welcher aus Gründen der Übersichtlichkeit die Komponenten 34 bis 40 betreffend die Blockiereinrichtung weggelassen sind. Hierzu ist am Gehäuse der Federeinrichtung 32 eine Lasche 48 befestigt, an die die Kolbenstange 50a eines zweiten Pneumatikzylinders 50 angelenkt ist, der wiederum an einer am Gehäuse 18 befestigten Lasche 52 gelenkig gelagert ist. Während der erste Pneumatikzylinder 38 zum Blockieren des Sicherungselementes 20 an der gemäß Figur 1 und 2 rechten Seite des Gerüstes 18 angeordnet ist, sitzt der zvveite Pneumatikzylinder 50 an der gemäß Figur 1 und 2 linken und somit gegenüberliegenden Seite des Gerüstes 18. Wie Figur 1 und 2 ferner erkennen läßt, ist die Lasche 28, an der die Federeinrichtung 32 angelenkt ist, in Schwenkrichtung gemäß Pfeil V in einem Winkel von etwa 135° zum Steckzapfen 22 angeordnet. Da die Federeinrichtung 32 am Gerüst 18 an einem Punkt angelenkt ist, der auf einer die beiden Längsachsen der beiden Lagerstäbe 14, 16 verbindenden Achse 54 und somit in direkter Verlängerung unterhalb des in seiner Arbeitsstellung befindlichen Steckzapfens 22 liegt, ist die Federeinrichtung 32 zur gemäß Figur 1 und 2 linken Seite des Gerüstes 18 schräg geneigt unter einem: Winkel von etwa 30° gegenüber der Achse 54 angeordnet.

Um das Sicherungselement 20 von der in Figur 1 und 2 gezeigten Arbeitsstellung in seine Ruhestellung gemäß Figur 3 zu klappen, wobei der Schwenkweg nur etwa 90° beträgt, wird die Kolbenstange 50a ausgefahren. Dadurch wird ein Drehmoment auf die Lasche 28 ausgeübt, und zwar in einer Richtung entgegen der Richtung des Pfeils V und somit auch gegen die Wirkung der Federeinrichtung 32, da während dieser Schwenkbewegung deren an der Lasche 28 gelagertes Ende 32a so zwangsgeführt wird, daß es gegen den Druck der Feder in die Federeinrichtung 32 eingefahren wird. Erreicht bei fortgesetzter Schwenkbewegung die Lasche 28 ihren untersten Punkt, so trifft sie die Achse 54, was zur Folge hat, daß die Federeinrichtung 32 nun auf der Achse 54 liegt und einen Zustand einnimmt, in dem sie am stärksten komprimiert ist. Nach Durchlaufen dieser Position, die auch als Totpunkt bezeichnet werden kann, entspannt sich die Federeinrichtung 32 wieder, wodurch sie die vom Pneumatikzyiinder 50 erzeugte Schwenkbewegung noch unterstützt, bis sie die in Figur 3 gezeigte Stellung einnimmt, in der sie nun etwa spiegelbildlich gegenüber der in Figur 1 und 2 gezeigten Stellung in einem Winkel von etwa 30° gegenüber der Achse 54 zur anderen - gemäß Figur 3 rechten - Seite des Gerüstes 18 gerichtet und dabei benachbart zum (in Figur 3 weggelassenen, jedoch in den Figuren 1 und 2 dargestellten) Pneumatikzylinder 38 angeordnet ist.

Der zuvor geschilderte Bewegungsablauf führt zu einem Verschwenken des Steckzapfens 22 entgegen der Richtung des Pfeils V um etwa 90° unter die Aufstandsfläche 12 in die Ruhestellung gemäß Figur 3. Dieser Bewegungsablauf führt natürlich auch zu einem Verschwenken des Fortsatzes 30 aus einer im wesentlichen nach unten gerichteten Stellung gemäß Figur 1 und 2 in eine im wesentlichen waagerechte Stellung unterhalb der Aufstandsfläche 12 gemäß Figur 3. Damit diese Schwenkbewegung möglich ist, muß natürlich die (in Figur 3 nicht gezeigte) Blockierung gelöst, also durch Einfahren der Kolbenstange 38a in den Pneumatikzylinder 38 das Gelenkstück 36 mit dem daran befindlichen Anschlagelement 34 in die Ruhestellung gemäß Figur 1 verschwenkt sein.

Das Gerüst 18 ist in der dargestellten Ausführung in Längsrichtung der Lagerstäbe 14, 16 verschieblich gelagert. Hierdurch ist es möglich, den Steckzapfen 22 in seiner Lage an unterschiedliche Container anzupassen. Um das Gerüst 18 und somit den Steckzapfen 22 auf die gewünschte Position verschieben zu können, ist ein dritter Pneumatikzylinder 60 vorgesehen, dessen Kolben 60a an einer am Gehäuse 18 befestigten Lasche 62 angelenkt ist, wie Figur 4 erkennen läßt. Dabei ist der dritte Pneumatikzylinder 60 so ausgerichtet, daß sich dessen Kolbenstange 60a in Richtung der Lagerstäbe 14, 16 und somit parallel zu diesen bewegt und erstreckt. Zweckmäßigerweise wird der dritte Pneumatikzylinder 60 fernbedient betätigt.

Der zweite Pneumatikzylinder 50 und der dritte Pneumatikzylinder 60 - es können natürlich auch andere Arten von Antrieben wie beispielsweise ein Elektromagnet Verwendung finden - werden vorzugsweise fernbedient gesteuert, beispielsweise vom Führerhaus des Umschlaggerätes oder der Lokomotive. Zusätzlich können in den Figuren nicht dargestellte Anzeigen vorgesehen sein, die den Zustand der ersten bis dritten Pneumatikzylinder 38, 50 und 60 anzeigen.

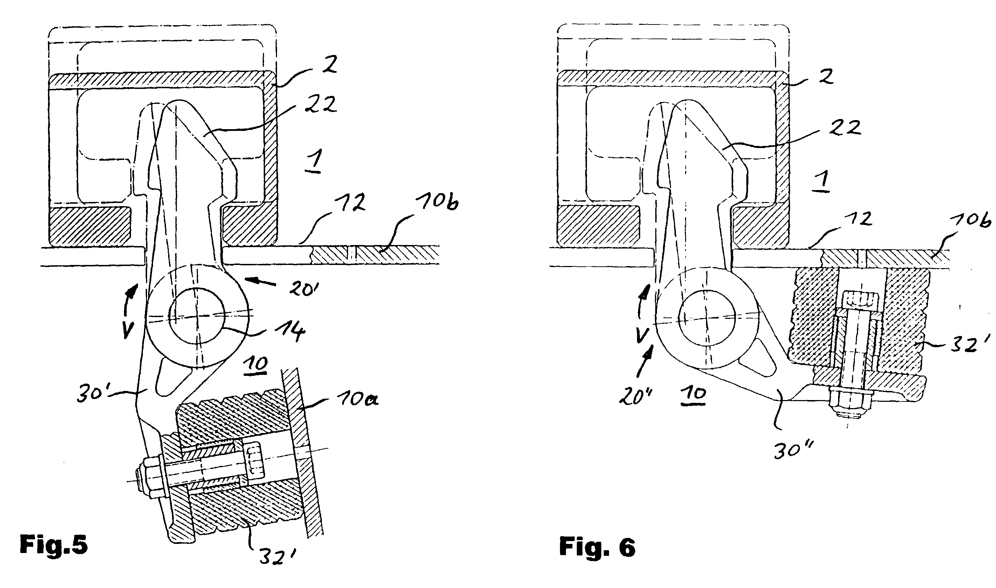

In Figur 5 ist eine weitere Ausführung dargestellt, die den gleichen Steckzapfen 22 wie die zuvor beschriebene Ausführung gemäß den Figuren 1 bis 4 aufweist, sich jedoch von jener Ausführung in einer veränderten Ausbildung der Federeinrichtung und im Fehlen der Blockiereinrichtung und Schwenkeinrichtung unterscheidet.

In der Ausführung gemäß Figur 5 ist die Feder 32' am anderen Hebelabschnitt 30' des als beidseitiger Hebel ausgebildeten Sicherungselementes 20' befestigt und liegt in der Arbeitsstellung des Steckzapfens 22 an einem als Widerlager dienenden Abschnitt 10a des Eisenbahnwaggons 10 an, um die Vorspannung zum Einrasten des Steckzapfens 22 am Beschlag in der zuvor beschriebenen Weise zu erzeugen.

Bei dieser Ausführung ist der andere Hebelabschnitt 30' im wesentlichen in Verlängerung zum Steckzapfen 22 an der gegenüberliegenden Seite des als Gelenk dienenden Lagerstabes 14 ausgebildet. Alternativ kann der andere Hebelabschnitt 30" gemäß Figur 6 aber auch gegenüber dem Steckzapfen 22 abgewinkelt sein, so daß in der Arbeitssteilung des Steckzapfens 22 die Feder 32' an der Unterseite einer am Eisenbahnwaggon 10 angeordneten Aufstandsplatte 10b, dessen Oberseite die Aufstandsfläche 12 bildet, anliegt.

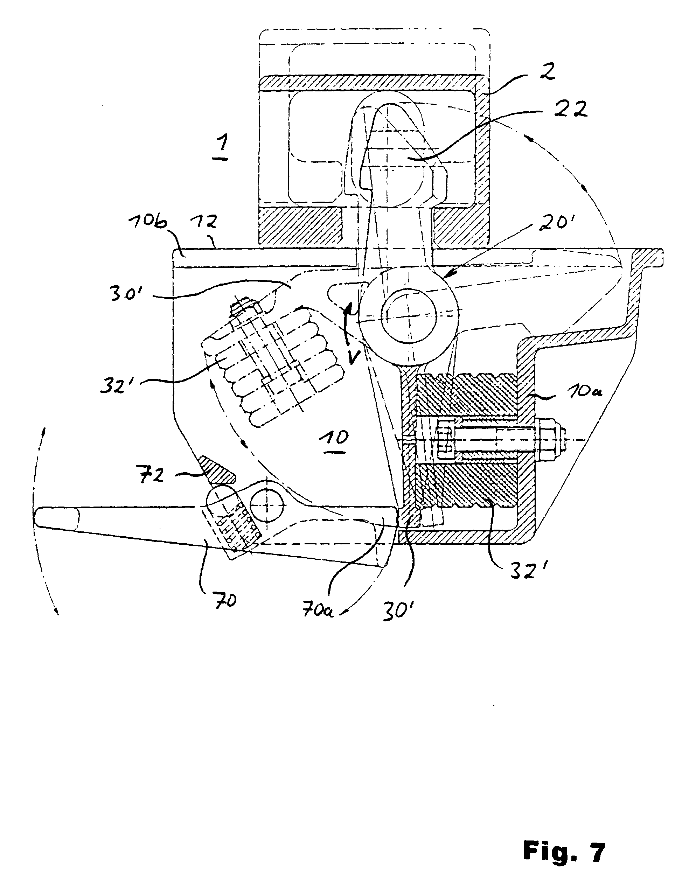

In beiden zuvor beschriebenen Ausführungen gemäß den Figuren 5 und 6 läßt sich das Sicherungselement 20' bzw. 20" verschwenker, so daß der Steckzapfen 22 von der dargestellten Arbeitsstellung in eine Ruhestellung unterhalb der Aufstandsfläche 12 und umgekehrt verbracht werden kann, wobei die Anordnung dieser Ausführungen allerdings eine Schwenkbewegung in Richtung des Pfeils V und somit in gleiche Richtung wie die Wirkung der Vorspannung erlaubt. Für die Ausführung gemäß Figur 5 ist die Ruhestellung in Figur 7 gestrichelt skizziert. Es bedarf diesbezüglich natürlich keiner besonderen Erwähnung, daß ein entsprechender Durchbruch in der Aufstandsplatte 10b ausgebildet sein muß, um ein Verschwenken des Steckzapfens 22 in die Ruhelage zu ermöglichen, in der er versenkt unterhalb der Aufstandsfläche 12 liegt.

Da bei den zuvor erörterten Ausführungen gemäß den Figuren 5 und 6 die Feder 32' am gegenüberliegenden anderen Hebelabschnitt 30' bzw. 30" befestigt und an dem Abschnitt 10a (Figur 5) bzw. der Unterseite der Aufstandsplatte 10b (Figur 6) des Eisenbahnwaggons 10 lediglich anliegt, wird beim Verschwenken des Sicherungselementes 20' bzw. 20" von der Arbeitsstellung in die Ruhestellung die Feder 32' vom anderen Hebelabschnitt 30' bzw. 30" entsprechend mitgenommen und- vom Abschnitt 10a bzw. der Unterseite der Aufstandsplatte 10b des Eisenbahnwaggons 10 gelöst, wie in Figur 7 gestrichelt dargestellt ist.

Alternativ ist es aber auch möglich, die Feder 32' am Abschnitt 10a des Eisenbahnwaggons 10 zu befestigen und den gegenüberliegenden anderen Hebelabschnitt 30' des Sicherungselementes 20' in Anlage an die so befestigte Feder 32' zu bringen, wenn das Sicherungselement 20' von der Ruhe- in die Arbeitsstellung verschwenkt wird. Diese Ausführung ist in Figur 7 in durchgezogenen Linien dargestellt. Bei dieser Ausführung verbleibt die Feder 32' stets am Abschnitt 10a des Eisenbahnwaggons 10, und zwar unabhängig davon, ob sich das Sicherungselement 20' in seiner Arbeitsstellung oder seiner Ruhestellung befindet. Dabei muß die Feder 32' natürlich in einem solchen Abstand zur Aufstandsplatte 10b des Eisenbahnwaggons 10 angeordnet sein, daß noch genügend Platz für den Steckzapfen 22 verbleibt, wenn dieser in die Ruhestellung unterhalb der Aufstandsfläche 12 abgeklappt ist, wie in Figur 7 gestrichelt angedeutet ist.

Zur Arretierung des Sicherungselementes 20' in der Arbeitsstellung kann ein Handhebel 70 mit Raste 72 vorgesehen sein, wobei der Handhebel 70 mit seinem freien Ende 70a in Anlage an die gegenüberliegende Seite des anderen Hebelabschnittes 30' des Sicherungselementes 20' bringbar ist, so daß der andere Hebelabschnitt 30' zwischen der Feder 32' einerseits und dem freien Ende 70a des Handhebels 70 andererseits liegt, wie Figur 7 erkennen läßt. Demnach bildet das freie Ende 70a des Handhebels 70 einen Anschlag, der eine Schwenkbewegung des Sicherungselementes 20' und somit des Steckzapfens 22 in Richtung des Pfeils V und somit in Richtung der von der Feder 32' erzeugten Vorspannung über die Position, in der der Steckzapfen 22 am Beschlag 2 einrastet, hinaus verhindert, gleichwohl eine Schwenkbewegung in entgegengesetzter Richtung entgegen der Vorspannung der Feder 32' sowie in Richtung der Vorspannung und somit in Richtung des Pfeils V bis zu der Position, in der der Steckzapfen 22 am Beschlag 2 einrastet, zuläßt. Wird demgegenüber der Handhebel 70 mit seinem freien Ende 70a vom Sicherungselement 20' wegverschwenkt, läßt sich dieses in die gestrichelt in Figur 7 gezeigte Ruhestellung verschwenken, wodurch der Steckzapfen 22 unter die Aufstandsfläche 12 geklappt wird.

Abschließend sei noch angemerkt, daß gewöhnlich mehrere der zuvor beschriebenen Vorrichtungen vorgesehen sind, um einen Container 1 o.dgl. am Eisenbahnwaggon 10 sicher zu befestigen. Gewöhnlich werden hierzu sämtliche an der als Auflageseite dienenden Unterseite des Containers 1 vorgesehene Eckbeschläge verwendet. Dabei sollten jeweils zwei der zugehörigen Sicherungselemente so angeordnet sein, daß die ersten Vorsprünge 24 der Steckzapfen 22 voneinander weggerichtet sind und die Federeinrichtungen so ausgebildet sein, daß die Steckzapfen 22 in entgegengesetzter Richtung voneinander weg vorgespannt sind. Somit hintergreifen die ersten Vorsprünge 24 der Steckzapfen 22 die ersten Abschnitte 2a der Beschläge 2 in entgegengesetzter Richtung voneinanderweg, wodurch sich als besonderer zusätzlicher Effekt eine sichere Fixierung des Containers 1 in seiner Position in Richtung zwischen jenen Steckzapfen 22 ergibt.

## Patentansprüche

1. Vorrichtung zur Sicherung eines Gegenstandes, insbesondere Containers oder Wechselbehälters, auf einem Fahrzeug insbesondere einem Behältertragwagen mit mindestens einem am Fahrzeug (10) befestigten und mit einem ersten Eingriffsabschnitt (24) versehenen Sicherungselement (20; 20'; 20"), das bei Aufsetzen des Gegenstandes (1) auf das Fahrzeug (10) in einen am Gegenstand (1) angeordneten Beschlag (2) einfünrbar und mit einem ersten Abschnitt (2a) des Beschlages (2) in Eingriff bringbar ist,
dadurch gekennzeichnet, daß der erste Eingriffsabschnitt (24) beweglich gelagert, für den Eingriff mit dem Beschlag (2) federnd vorgespannt und derart ausgebildet ist, daß er beim Aufsetzen des Gegenstandes (1) auf das Fahrzeug (10) aufgrund der Wirkung der Vorspannung, selbsttätig am Beschlag (2) einrastet und sich beim Abheben des Gegenstandes (1) vom Fahrzeug (10) erst nach Überwindung der Vorspannung selbsttätig aus dem Beschlag (2) löst, wobei die Vorspannung so bemessen ist, daß ein unbeabichtigtes Abheben des Gegenstandes (1) vom Fahrzeug (10) während der Fahrt im wesentlichen nicht möglich ist.

2. Vorrichtung nach Anspruch 1,
dadurch gekennzeichnet, daß der erste Eingriffsabschnitt (24) in Eingriffsrichtung um eine Achse (14a) schwenkbar gelagert ist.

3. Vorrichtung nach Anspruch 1 oder 2,
dadurch gekennzeichnet, daß das gesamte Sicherungselement (20; 20'; 20") beweglich gelagert und für das Einrasten des ersten Eingriffsabschnittes (24) am Beschlag (2) federnd vorgespannt ist.

4. Vorrichtung nach mindestens einem der Ansprüche 1 bis 3,
dadurch gekennzeichnet, daß das Sicherungselement (20; 20'; 20") als Zapfen (22) ausgebildet ist.

5. Vorrichtung nach Anspruch 4,
dadurch gekennzeichnet, daß der Zapfen (22) im wesentlichen aufrecht steht.

6. Vorrichtung nach mindestens einem der Ansprüche 1 bis 5,
dadurch gekennzeichnet, daß der erste Eingriffsabschnitt als vom Sicherungselement (20; 20'; 20") seitlich abstehender erster Vorsprung (24) ausgebildet ist, der bei auf das Fahrzeug (10) aufgesetztem Gegenstand (1) den ersten Abschnitt (2a) des Beschlages (2) hintergreift.

7. Vorrichtung nach Anspruch 6,
dadurch gekennzeichnet, daß sich der erste Vorsprung (24) nach außen hin verjüngt.

8. Vorrichtung nach Anspruch 7,
dadurch gekennzeichnet, daß das Sicherungselement (20; 20'; 20") ein freies Ende (22c), mit dem es in den Beschlag (2) am Gegenstand (1) einführbar ist, und der erste Vorsprung (24) mindestens eine erste Fläche (24c), die sich gegenüber der Einführrichtung (Z) geneigt in Richtung auf das freie Ende (22c) erstreckt und eine zweite Fläche (24a) aufweist, die sich ebenfalls gegenüber der Einführrichtung (Z) geneigt, jedoch gegenüber der ersten Fläche (24c) in entgegengesetzter Richtung erstreckt, wobei die erste Fläche (24c) und die zweite Fläche (24a) während des Aufsetzens und Abhebens des Gegenstandes (1) auf das und von dem Fahrzeug (10) zumindest zeitweise am ersten Abschnitt (2a) des Beschlages (2) in Anlage bringbar sind.

9. Vorrichtung nach mindestens einem der Ansprüche 1 bis 8,
dadurch gekennzeichnet, daß das Sicherungselement (20; 20'; 20") mit einem zweiten Eingriffsabschnitt (26) versehen ist, der in Eingriff mit einem zweiten Abschnitt (2b) des Beschlages (2) für den Fall bringbar ist, daß sich der erste Eingriffsabschnitt (24) vom ersten Abschnitt (2a) des Beschlages (2) löst.

10. Vorrichtung nach Anspruch 9,
dadurch gekennzeichnet, daß der zweite Eingriffsabschnitt (26) am Sicherungselement (20; 20'; 20") derart angeordnet ist, daß er in einer Richtung im wesentlichen entgegengesetzt zur Richtung (V) der Vorspannung wirkt.

11. Vorrichtung nach Anspruch 9 oder 10,
dadurch gekennzeichnet, daß der zweite Eingriffsabschnitt als vom Sicherungselement seitlich abstehender zweiter Vorsprung (26) zum Hintergreifen des zweiten Abschnittes (2b) des Beschlages (2) ausgebildet ist.

12. Vorrichtung nach Anspruch 11,
dadurch gekennzeichnet, daß der zweite Vorsprung eine ein Widerlager in bezug auf den zweiten Abschnitt des Beschlages bildende Kante aufweist.

13. Vorrichtung nach Anspruch 11 oder 12,
dadurch gekennzeichnet, daß der zweite Vorsprung (26) mindestens eine in bezug auf den zweiten Abschnitt (2b) des Beschlages (2) ein Widerlager bildende erste Fläche (26a) aufweist.

14. Vorrichtung nach Anspruch 13,
dadurch gekennzeichnet, daß die erste Fläche (26a) etwa rechtwinklig zur Einführrichtung (Z) verläuft.

15. Vorrichtung nach mindestens einem der Ansprüche 6 bis 8 sowie ferner nach mindestens einem der Ansprüche 11 bis 14,
dadurch gekennzeichnet, daß die beiden Vorsprünge (24, 26) gemeinsam einen wulstförmigen Abschnitt (22b) am Sicherungselement (20; 20'; 20") bilden.

16. Vorrichtung nach den Ansprüchen 10 und 15, bei welcher der Beschlag (2) eine Aussparung (6) aufweist, in die das Sicherungselement (20; 20'; 20") einführbar ist, und
der erste Abschnitt (2a) und der zweite Abschnitt (2b) des Beschlages (2) die Aussparung begrenzen,
dadurch gekennzeichnet, daß die Breite (Y) des wulstförmigen Abschnittes (22b) des Sicherungselementes (20; 20'; 20") zwischen den beiden Vorsprüngen (24, 26) nach dem Abstand (X) zwischen den beiden Abschnitten (2a, 2b) des Beschlages (2) bemißt.

17. Vorrichtung nach Anspruch 8, Anspruch 13 oder 14 sowie Anspruch 16,
dadurch gekennzeichnet, daß der erste Abschnitt (2a) und der zweite Abschnitt (2b) des Beschlages (2) im wesentlichen in einer Ebene liegen, welche etwa rechtwinklig zur Einführrichtung (Z) verläuft, und die erste Fläche (26a) des zweiten Vorsprunges (26) in einem geringeren Abstand vom freien Ende (22c) des Sicherungselementes (20; 20'; 20") als die zweite Fläche (24a) des ersten Vorsprunges (24) angeordnet ist, so daß bei unbeabsichtigtem Abheben des Gegenstandes (1) vom Fahrzeug (10) die erste Fläche (26a) des zweiten Vorsprunges (26) in Anlage an den zweiten Abschnitt (2b) des Beschlages (2) gelangt, wenn die zweite Fläche (24a) des ersten Vorsprunges (24) außer Anlage vom ersten Abschnitt (2a) des Beschlages (2) gelangt ist.

18. Vorrichtung nach mindestens einem der Ansprüche 1 bis 17,
dadurch gekennzeichnet, daß die Vorspannung einstellbar ist.

19. Vorrichtung nach mindestens einem der Ansprüche 1 bis 18,
dadurch gekennzeichnet, daß die Vorspannung von einer Feder (32) erzeugt wird, die mit ihrem einen Ende am Sicherungselement (20) und mit ihrem anderen Ende am Fahrzeug (10) befestigt ist.

20. Vorrichtung nach mindestens einem der Ansprüche 1 bis 19, bei welcher das Sicherungselement (20; 20'; 20") in einer Arbeitsstellung zumindest zu einem Teil oberhalb einer auf dem Fahrzeug (10) für die Auflage des Gegenstandes (1) vorgesehenen Aufstandsfläche (12) angeordnet ist,
dadurch gekennzeichnet, daß das Sicherungselement (20; 20'; 20") bei Nichtgebrauch in eine Ruhestellung verbringbar ist, in der es vollständig unterhalb der Aufstandsfläche (12) liegt.

21. Vorrichtung nach den Ansprüchen 2, 3 und 20,
dadurch gekennzeichnet, daß das Sicherungselement (20; 20'; 20") um die Schwenkachse (14a) in die Ruhestellung klappbar ist.

22. Vorrichtung nach den Ansprüchen 19 und 21,
dadurch gekennzeichnet, daß das Sicherungselement (20'; 20") als beidseitiger Hebel ausgebildet ist, an dessen einem Hebelabschnitt (22) der erste Eingriffsabschnitt (24) vorgesehen und an dessen entgegengesetztem Hebelabschnitt (30'; 30") die Feder (32') mit ihrem einen Ende befestigt ist, die als Druckfeder ausgebildet und mit ihrem anderen Ende in Anlage an ein am Fahrzeug (10) vorgesehenen Anschlag (10a; 10b) bringbar ist.

23. Vorrichtung nach mindestens einem der Ansprüche 20 bis 22,
gekennzeichnet durch eine Einrichtung (50; 70) zur Arretierung des Sicherungselementes (20; 20') in seiner Arbeitsstellung derart, daß es nicht in die Ruhestellung gelangen kann.

24. Vorrichtung nach mindestens einem der Ansprüche 1 bis 23,
gekennzeichnet durch eine Einrichtung (34, 38) zum Blockieren des ersten Eingriffsabschnittes (24) in der Position, in der er am Beschlag (2) eingerastet ist.

25. Vorrichtung nach Anspruch 24,
dadurch gekennzeichnet, daßdie Blockiereinrichtung ein Anschlagelement (34) aufweist, das zwischen einer Arbeitsstellung und einer Ruhestellung bewegbar gelagert und in seiner Arbeitsstellung derart angeordnet ist, daß das Sicherungselement (20) in Bewegungsrichtung entgegengesetzt zur Vorspannrichtung (V) in Anlage an das Anschlagelement (34) bringbar ist bzw. am Anschlagelement (24) anliegt, wenn der erste Eingriffsabschnitt (24) am Beschlag (2) eingerastet ist.

26. Vorrichtung nach den Ansprüchen 2, 3 und 25,
dadurch gekennzeichnet, daß das Sicherungselement (20) als beidseitiger Hebel ausgebildet ist, an dessen einem Hebelabschnitt (22) der erste Eingriffsabschnitt (24) vorgesehen ist und dessen anderer Hebelabschnitt (30) in Schwenkrichtung entgegengesetzt zur Vorspannrichtung (V) in Anlage an das Anschlagelement (34) bringbar ist bzw. am Anschlagelement (34) anliegt, wenn das Anschlagelement (34) sich in seiner Arbeitsstellung befindet und der erste Eingriffsabschnitt (24) am Beschlag (2) eingerastet ist.

27. Vorrichtung nach Anspruch 25 oder 26,
dadurch gekennzeichnet, daß das Anschlagelement (34) in seiner Arbeitsstellung arretierbar ist.

28. Vorrichtung nach mindestens einem der Ansprüche 24 bis 27,
gekennzeichnet durch eine Einrichtung (42, 44), die die Fahrtgeschwindigkeit des Fahrzeuges (10) erfaßt und die Blockiereinrichtung (34, 38) nur bei Stillstand des Fahrzeuges deaktiviert.

29. Vorrichtung nach mindestens einem der Ansprüche 1 bis 28,
dadurch gekennzeichnet, daß das Sicherungselement (20) in seiner Position am Fahrzeug (10) verstellbar angeordnet ist.

30. Vorrichtung nach Anspruch 29,
gekennzeichnet durch eine Antriebseinrichtung (60) zur Verstellung und Arretierung des Sicherungselementes (20).

31. Vorrichtung nach Anspruch 29 oder 30,
dadurch gekennzeichnet, daß das Sicherungselement (20) etwa quer zur Einführrichtung (Z), insbesondere entlang einer auf dem Fahrzeug (10) für die Auflage des Gegenstandes (1) vorgesehenen Aufstandsfläche (12), verstellbar angeordnet ist.

32. Vorrichtung nach mindestens einem der Ansprüche 1 bis 31,
dadurch gekennzeichnet, daß das Sicherungselement (20) an einem Gerüst (18) oder in einem Gehäuse gelagert ist.

33. Vorrichtung nach Anspruch 32 sowie nach mindestens einem der Ansprüche 29 bis 31,
dadurch gekennzeichnet, daß das Gerüst (18) oder Gehäuse in seiner Position am Fahrzeug (10) verstellbar angeordnet ist,

34. Vorrichtung nach mindestens einem der Ansprüche 1 bis 33, mit mindestens zwei am Fahrzeug (10) befestigten Sicherungselementen (20; 20'; 20") und mindestens zwei zugehörigen am Gegenstand angeordneten Beschlägen (2),
dadurch gekennzeichnet, daß die ersten Eingriffsabschnitte (24) der Sicherungselemente (20; 20'; 20") in entgegengesetzter Richtung voneinander weg vorgespannt sind.

## Claims

1. A device for securing an object, in particular a container or a swap body, on a vehicle, in particular a container wagon, having at least one securing element (20; 20'; 20") which is fixed to the vehicle (10) and is provided with a first engagement portion (24), and which may be inserted into a fitting (2) arranged on the object (1) and brought into engagement with a first portion (2a) of the fitting (2) when the object (1) is placed on the vehicle (10), characterised in that the first engagement portion (24) is movably mounted, is resiliently pre-tensioned for engagement with the fitting (2) and constructed such that, when the object (1) is placed on the vehicle (10), it latches automatically in the fitting (2) as a result of the pre-tensioning action and, when the object (1) is lifted from the vehicle (10), it is only automatically released from the fitting (2) after overcoming the pre-tension, the pre-tension being selected such that it is substantially impossible for the object (1) to be accidentally lifted from the vehicle (10) during transport.

2. A device according to Claim 1, characterised in that the first engagement portion (24) is mounted such that it may be pivoted about an axis (14a) in the engagement direction.

3. A device according to Claim 1 or 2, characterised in that the entire securing element (20; 20'; 20") is movably mounted and is resiliently pre-tensioned so that the first engagement portion (24) latches in the fitting (2).

4. A device according to at least one of Claims 1 to 3, characterised in that the securing element (20; 20'; 20") is constructed as a pivot (22).

5. A device according to Claim 4, characterised in that the pivot (22) stands substantially upright.

6. A device according to at least one of Claims 1 to 5, characterised in that the first engagement portion is constructed as a first projection (24) which protrudes laterally from the securing element (20; 20'; 20") and reaches behind the first portion (2a) of the fitting (2) when the object (1) has been placed on the vehicle (10).

7. A device according to Claim 6, characterised in that the first projection (24) tapers outwardly.

8. A device according to Claim 7, characterised in that the securing element (20; 20'; 20") has a free end (22c) by means of which it may be inserted into the fitting (2) on the object (1), and the first projection (24) has at least a first face (24c), which extends in the direction of the free end (22c) at an angle with respect to the direction of insertion (Z), and a second face (24a) which is likewise at an angle with respect to the direction of insertion (Z) but extends in the opposite direction with respect to the first face (24c), it being possible for the first face (24c) and the second face (24a) to be brought into at least partial contact with the first portion (2a) of the fitting (2) whilst the object (1) is being placed on, and lifted from, the vehicle (10).

9. A device according to at least one of Claims 1 to 8, characterised in that the securing element (20; 20'; 20") is provided with a second engagement portion (26) which may be brought into engagement with a second portion (2b) of the fitting (2) in the event that the first engagement portion (24) is released from the first portion (2a) of the fitting (2).

10. A device according to Claim 9, characterised in that the second engagement portion (26) is arranged on the securing element (20;, 20';, 20") such that it acts substantially in opposition to the direction (V) of the pre-tension in one direction.

11. A device according to Claim 9 or 10, characterised in that the second engagement portion is constructed as a second projection (26) which protrudes laterally from the securing element and is intended for reaching behind the second portion (2b) of the fitting (2).

12. A device according to Claim 11, characterised in that the second projection has an edge forming an abutment with respect to the second portion of the fitting.

13. A device according to Claim 11 or 12, characterised in that the second projection (26) has at least one first face (26a) forming an abutment with respect to the second portion (2b) of the fitting (2).

14. A device according to Claim 13, characterised in that the first face (26a) extends approximately at a right angle to the direction of insertion (Z).

15. A device according to at least one of Claims 6 to 8, and furthermore to at least one of Claims 11 to 14, characterised in that the two projections (24, 26) together form a bead-like portion (22b) on the securing element (20; 20'; 20").

16. A device according to Claims 10 and 15, in which the fitting (2) has a cutout (6) into which the securing element (20; 20'; 20") may be inserted, and the first portion (2a) and the second portion (2b) of the fitting (2) delimit the cutout, characterised in that the width (Y) of the bead-like portion (22b) of the securing element (20; 20'; 20") between the two projections (24, 26) is proportionate to the spacing (X) between the two portions (2a, 2b) of the fitting (2).

17. A device according to Claim 8, Claim 13 or 14 and Claim 16, characterised in that the first portion (2a) and the second portion (2b) of the fitting (2) lie substantially in a plane which extends approximately at a right angle to the direction of insertion (Z), and the first face (26a) of the second projection (26) is arranged at a smaller spacing from the free end (22c) of the securing element (20; 20'; 20") than the second face (24a) of the first projection (24), so that, if the object (1) is accidentally lifted from the vehicle (10), the first face (26a) of the second projection (26) moves into contact with the second portion (2b) of the fitting (2) when the second face (24a) of the first projection (24) has moved out of contact with the first portion (2a) of the fitting (2).

18. A device according to at least one of Claims 1 to 17, characterised in that the pre-tension is adjustable.

19. A device according to at least one of Claims 1 to 18, characterised in that the pre-tension is generated by a spring (32) which is fixed to the securing element (20) by means of its one end, and to the vehicle (10) by means of its other end.

20. A device according to at least one of Claims 1 to 19, in which the securing element (20; 20'; 20") is arranged in an operating position at least partly above a supporting face (12) provided on the vehicle (10) for supporting the object (1), characterised in that, when not in use, the securing element (20; 20'; 20") may be brought into a rest position in which it lies completely below the supporting face (12).

21. A device according to Claims 2, 3 and 20, characterised in that the securing element (20; 20'; 20") may be folded about the pivot axis (14a) into the rest position.

22. A device according to Claims 19 and 21, characterised in that the securing element (20'; 20") is constructed as a two-ended lever, whereof one lever portion (22) has the first engagement portion (24) provided thereon, and the opposite lever portion (30'; 30") has the spring (32') fixed thereto by means of its one end, said spring being constructed as a pressure spring which may be brought into contact with a stop (10a; 10b) provided on the vehicle (10) by means of its other end.

23. A device according to at least one of Claims 20 to 22, characterised by a device (50; 70) for locking the securing element (20; 20') in its operating position, so that it can not move into the rest position.

24. A device according to at least one of Claims 1 to 23, characterised by a device (34, 38) for blocking the first engagement portion (24) in the position in which it is latched in the fitting (2).

25. A device according to Claim 24, characterised in that the blocking device has a stop element (34) which is mounted such that it may be moved between an operating position and a rest position, and is arranged in its operating position such that the securing element (20) may be brought into contact with the stop element (34) in the direction of movement opposed to the tensioning direction (V), or abuts against the stop element (24) when the first engagement portion (24) is latched in the fitting (2).

26. A device according to Claims 2, 3, and 25, characterised in that the securing element (20) is constructed as a two-ended lever, whereof one lever portion (22) has the first engagement portion (24) provided thereon, and the other lever portion (30) may be brought into contact with the stop element (34) in the pivoting direction opposed to the pre-tensioning direction (V) or abuts against the stop element (34) when the stop element (34) is located in its operating position and the first engagement portion (24) is latched in the fitting (2).

27. A device according to Claim 25 or 26, characterised in that the stop element (34) may be locked in its operating position.

28. A device according to at least one of Claims 24 to 27, characterised by a device (42, 44) which detects the travelling speed of the vehicle (10) and deactivates the blocking device (34, 38) only when the vehicle is stationary.

29. A device according to at least one of Claims 1 to 28, characterised in that the securing element (20) is arranged such that its position on the vehicle (10) may be adjusted.

30. A device according to Claim 29, characterised by a drive device (60) for adjusting and locking the securing element (20).

31. A device according to Claim 29 or 30, characterised in that the securing element (20) is arranged such that it may be adjusted approximately transversely with respect to the direction of insertion (Z), in particular along a supporting face (12) provided on the vehicle (10) for supporting the object (1).

32. A device according to at least one of Claims 1 to 31, characterised in that the securing element (20) is mounted on a frame (18) or in a housing.

33. A device according to Claim 32 and at least one of Claims 29 to 31, characterised in that the frame (18) or housing is arranged such that its position on the vehicle (10) may be adjusted.

34. A device according to at least one of Claims 1 to 33, having at least two securing elements (20; 20'; 20") fixed to the vehicle (10), and at least two associated fittings (2) arranged on the object, characterised in that the first engagement portions (24) of the securing elements (20; 20'; 20") are pre-tensioned in the opposite direction away from one another.

## Revendications

1. Dispositif pour protéger un objet, en particulier des conteneurs ou des conteneurs interchangeables sur un véhicule, en particulier des véhicules citerne, comprenant au moins un élément de protection (20; 20'; 20"), fixé au véhicule (10) et muni d'une première section d'engagement (24), élément qui, lors de la mise en place de l'objet (1) sur le véhicule (10), peut être introduit dans une armature (2) disposée sur l'objet (1) et peut être engagé dans la première section (2a) de l'armature (2), caractérisé en ce que la première section d'engagement (24) est logée de façon mobile, précontrainte de façon élastique pour l'engagement dans l'armature (2), et réalisée de telle sorte que lors de la mise en place de l'objet (1) sur le véhicule (10) elle s'engage automatiquement au niveau de l'armature (2) sous l'action de la précontrainte et se détache automatiquement de l'armature (2) lors du retrait de l'objet (1) du véhicule (10) uniquement après avoir résisté à la précontrainte, la précontrainte étant calculée de telle sorte qu'un retrait non intentionnel de l'objet (1) du véhicule (10) pendant le déplacement est pour l'essentiel impossible.

2. Dispositif selon la revendication 1, caractérisé en ce que la première section d'engagement (24) peut pivoter autour d'un axe (14a) dans la direction d'engagement.

3. Dispositif selon la revendication 1 ou 2, caractérisé en ce que l'ensemble de l'élément de protection (20; 20'; 20") est logé de façon mobile et est précontraint de façon élastique pour l'enclenchement de la première section d'engagement (24) au niveau de l'armature (2).

4. Dispositif selon au moins l'une quelconque des revendications 1 à 3, caractérisé en ce que l'élément de protection (20; 20'; 20") est réalisé sous la forme d'un tenon (22).

5. Dispositif selon la revendication 4, caractérisé en ce que le tenon (22) est substantiellement redressé.

6. Dispositif selon au moins l'une quelconque des revendications 1 à 5, caractérisé en ce que la première section d'engagement est réalisée sous la forme d'une première saillie (24) dépassant latéralement l'élément de protection (20; 20'; 20"), la saillie venant en prise derrière la première section (2a) de l'armature (2) lorsque l'objet (1) est posé sur le véhicule (10).

7. Dispositif selon la revendication 6, caractérisé en ce que la première saillie (24) diminue vers l'extérieur.

8. Dispositif selon la revendication 7, caractérisé en ce que l'élément de protection (20; 20'; 20") présente une extrémité libre (22c) par laquelle il peut être introduit dans l'armature (2) sur l'objet (1), et en ce que la première saillie (24) présente au moins une première surface (24c) qui s'étend de façon inclinée par rapport à la direction d'introduction (Z) dans la direction de l'extrémité libre (22c) et une deuxième surface (24a) qui s'étend également de façon inclinée par rapport à la direction d'introduction (Z) mais dans une direction opposée à la première surface (24c), la première surface (24c) et la deuxième surface (24a) pouvant être mises en butée contre la première section (2a) de l'armature (2) lorsque l'objet (1) est posé sur le véhicule (10) ou est retiré de celui-ci.

9. Dispositif selon au moins l'une quelconque des revendications 1 à 8, caractérisé en ce que l'élément de protection (20; 20'; 20") est muni d'une deuxième section d'engagement (26) qui peut être engagée dans une deuxième section (2b) de l'armature (2) au cas où la première section d'engagement (24) se détacherait de la première section (2a) de l'armature (2).

10. Dispositif selon la revendication 9, caractérisé en ce que la deuxième section d'engagement (26) sur l'élément de protection (20; 20'; 20") est disposée de telle sorte qu'elle agit dans une direction substantiellement opposée à la direction (V) de la précontrainte.

11. Dispositif selon la revendication 9 ou 10, caractérisé en ce que la deuxième section d'engagement est réalisée sous la forme d'une deuxième saillie (26) dépassant latéralement l'élément de protection pour venir en prise derrière la deuxième section (2b) de l'armature (2).

12. Dispositif selon la revendication 11, caractérisé en ce que la deuxième saillie présente une butée opposée par rapport à un bord formant la deuxième section de l'armature.

13. Dispositif selon la revendication 11 ou 12, caractérisé en ce que la deuxième saillie (26) présente au moins une première surface (26a) formant une butée opposée par rapport à la deuxième section (2b) de l'armature (2).

14. Dispositif selon la revendication 13, caractérisé en ce que la première surface (26a) s'étend environ perpendiculairement à la direction d'introduction (Z).

15. Dispositif selon au moins l'une quelconque des revendications 6 à 8, ainsi qu'en outre selon au moins l'une quelconque des revendications 11 à 14, caractérisé en ce que les deux saillies (24, 26) forment ensemble une section en forme de bourrelet (22b) sur l'élément de protection (20; 20'; 20").

16. Dispositif selon les revendications 10 et 15, dans lequel l'armature (2) présente un évidement (6) dans laquelle l'élément de protection (20; 20'; 20") peut être introduit, et dans lequel la première section (2a) et la deuxième section (2b) de l'armature (2) délimitent l'évidement, caractérisé en ce que la largeur (Y) de la section en forme de bourrelet (22b) de l'élément de protection (20; 20'; 20") entre les deux saillies (24, 26) est calculée selon la distance (X) entre les deux sections (2a, 2b) de l'armature (2).

17. Dispositif selon la revendication 8, la revendication 13 ou 14, ainsi que la revendication 16, caractérisé en ce que la première section (2a) et la deuxième section (2b) de l'armature (2) se trouvent essentiellement dans un plan qui s'étend environ perpendiculairement à la direction d'introduction (Z), et en ce que la première surface (26a) de la deuxième saillie (26) est disposée à une distance plus réduite de l'extrémité libre (22c) de l'élément de protection (20; 20'; 20") que la deuxième surface (24a) de la première saillie (24), de sorte que la première surface (26a) de la deuxième saillie (26) vient en butée contre la deuxième section (2b) de l'armature (2) lorsque l'objet (1) est retiré du véhicule (10) de façon non intentionnelle, lorsque la deuxième surface (24a) de la première saillie (24) a quitté la butée de la première section (2a) de l'armature (2).

18. Dispositif selon au moins l'une quelconque des revendications 1 à 17, caractérisé en ce que la précontrainte est réglable.

19. Dispositif selon au moins l'une quelconque des revendications 1 à 18, caractérisé en ce que la précontrainte est générée par un ressort (32) qui est fixé par l'une de ses extrémités à l'élément de protection (20) et avec son autre extrémité au véhicule (10).

20. Dispositif selon au moins l'une quelconque des revendications 1 à 19, dans lequel l'élément de protection (20; 20'; 20"), dans une position de service, est disposé au moins partiellement au-dessus d'une surface de contact (12) prévue sur le véhicule (10) pour supporter l'objet (1), caractérisé en ce que, lorsqu'il n'est pas utilisé, l'élément de protection (20; 20'; 20") peut être ramené dans une position de repos dans laquelle il se trouve entièrement au-dessous de la surface de contact (12).

21. Dispositif selon les revendications 2, 3 et 20, caractérisé en ce que l'élément de protection (20; 20'; 20") peut être replié en position de repos autour de l'axe de pivotement (14a).

22. Dispositif selon les revendications 19 et 21, caractérisé en ce que l'élément de protection (20'; 20") est réalisé comme un levier à deux extrémités, à l'une des sections de levier (22) duquel est prévue la première section d'engagement (24) et à la section de levier opposée (30'; 30") duquel le ressort est fixé par l'une de ses extrémités, le ressort étant réalisé comme un ressort de compression et pouvant être amené par son autre extrémité en butée contre une butée (10a; 10b) prévue sur le véhicule (10).

23. Dispositif selon au moins l'une quelconque des revendications 20 à 22, caractérisé par un dispositif (50; 70) pour arrêter l'élément de protection (20; 20') dans sa position de service, de sorte qu'il ne peut pas atteindre la position de repos.

24. Dispositif selon au moins l'une quelconque des revendications 1 à 23, caractérisé par un dispositif (34, 38) pour bloquer la première section d'engagement (24) dans la position dans laquelle il est engagé au niveau de l'armature (2).

25. Dispositif selon la revendication 24, caractérisé en ce que le dispositif de blocage présente un élément de butée (34) qui est logé de façon mobile entre une position de service et une position de repos et est disposé dans sa position de service de telle sorte que l'élément de protection (20), dans la direction de mouvement à l'opposé de la direction de précontrainte (V), peut être amené en butée contre l'élément de butée (34), ou se trouve en butée contre l'élément de butée (24), lorsque la première section d'engagement (24) est engagée au niveau de l'armature (2).

26. Dispositif selon les revendications 2, 3 et 25, caractérisé en ce que l'élément de protection (20) est réalisé sous la forme d'un levier à deux extrémités, à l'une des sections de levier (22) duquel est prévue la première section d'engagement (24) et dont l'autre section de levier (3), dans la direction de pivotement à l'opposé de la direction de précontrainte (V), peut être amenée en butée contre l'élément de butée (34), ou est en butée contre l'élément de butée (34), lorsque l'élément de butée (34) se trouve dans sa position de service et la première section d'engagement (24) est engagée au niveau de l'armature (2).

27. Dispositif selon la revendication 25 ou 26, caractérisé en ce que l'élément de butée (34) peut être arrêté dans sa position de service.

28. Dispositif selon au moins l'une quelconque des revendications 24 à 27, caractérisé par un dispositif (42, 44) qui détecte la vitesse de déplacement du véhicule (10) et désactive le dispositif de blocage (34, 38) uniquement lorsque le véhicule est arrêté.

29. Dispositif selon au moins l'une quelconque des revendications 1 à 28, caractérisé en ce que l'élément de protection (20) est disposé de façon réglable quant à sa position sur le véhicule (10).

30. Dispositif selon la revendication 29, caractérisé par un dispositif d'entraînement (60) pour régler et arrêter l'élément de protection (20).

31. Dispositif selon la revendication 29 ou 30, caractérisé en ce que l'élément de protection (20) est disposé de façon réglable, environ perpendiculairement à la direction d'introduction (Z), en particulier suivant une surface de contact (12) prévue sur le véhicule (10) pour supporter l'objet (1).

32. Dispositif selon au moins l'une quelconque des revendications 1 à 31, caractérisé en ce que l'élément de protection (20) est logé sur un cadre (18) ou dans un boîtier.

33. Dispositif selon la revendication 32 ainsi que selon au moins l'une quelconque des revendications 29 à 31, caractérisé en ce que le cadre (18) ou le boîtier est disposé de façon réglable quant à sa position sur le véhicule (10).

34. Dispositif selon au moins l'une quelconque des revendications 1 à 33, comprenant au moins deux l'éléments de protection (20; 20'; 20") fixés sur le véhicule (10) et au moins deux armatures (2) associées, disposées sur l'objet, caractérisé en ce que les premières sections d'engagement (24) des éléments de protection (20; 20'; 20") sont précontraintes en s'éloignant l'une de l'autre dans une direction opposée.
